(19) Europäisches Patentamt / European Patent Office / Office européen des brevets

(11) **EP 2 538 152 A1**

(12) **EUROPEAN PATENT APPLICATION**
published in accordance with Art. 153(4) EPC

(43) Date of publication:
**26.12.2012 Bulletin 2012/52**

(51) Int Cl.:
**F24J 2/10** (2006.01)     **G02B 5/10** (2006.01)
**G02B 7/182** (2006.01)

(21) Application number: **11744749.0**

(22) Date of filing: **18.02.2011**

(86) International application number:
**PCT/JP2011/053505**

(87) International publication number:
**WO 2011/102463 (25.08.2011 Gazette 2011/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2010 JP 2010034882**

(71) Applicant: **Kabushiki Kaisha Kobe Seiko Sho Kobe-shi, Hyogo 651-8585 (JP)**

(72) Inventor: **YOSHIMURA, Shoji Takasago-shi, Hyogo 676-8670 (JP)**

(74) Representative: **TBK Bavariaring 4-6 80336 München (DE)**

(54) **CONCAVE REFLECTING MIRROR FOR HELIOSTAT, AND METHOD FOR MANUFACTURING THE CONCAVE REFLECTING MIRROR**

(57)     Disclosed is a concave reflecting mirror (10) for a heliostat, said concave reflecting mirror being provided with: a reflecting member (11) wherein a mirror surface section (15) is provided on the front surface of a base material (14), the rigidity of the peripheral portion is lower than that at the center, and the mirror surface section (15) can be elastically deformed such that the mirror surface section forms a concave paraboloidal surface; a frame member (12), which supports the peripheral portion of the rear surface (16, 35) of the reflecting member (11); and an adjusting member (13), which is attached to the frame member (12), at a position facing substantially the center of the rear surface (16, 35) or that of the front surface of the reflecting member (11), and which elastically deforms the reflecting member (11) by pulling the rear surface (16, 35) of the reflecting member (11) or pressing the front surface of the reflecting member (11). The concave reflecting mirror does not require a pressing apparatus and a molding die, is easily manufactured, and has a highly accurate concave surface formed therein. A method of manufacturing the concave reflecting mirror is also provided.

FIG.2

EP 2 538 152 A1

**Description**

TECHNICAL FIELD

The present invention relates to a concave reflecting mirror for heliostat, which is used for a solar thermal electric generation system or the like, and a method for manufacturing the same.

BACKGROUND ART

In recent years, techniques using so-called natural energy, particularly, energy from sunlight, are drawing attention from the viewpoint of problems such as global warming and exhaustion of fossil fuel. The methods for using the energy from sunlight include a photovoltaic generation-using method in which the energy of "light" from sunlight is converted into electric energy by use of a solar battery such as amorphous silicon or the like, and a solar heat-using method in which the energy of "heat" from sunlight is collected to a solar energy collector or the like.

One of such solar heat-using methods is solar thermal power generation in which electric power is generated by collecting the sunlight to the solar energy collector by use of an optical means such as a mirror or lens to extract high-temperature heat, and a turbine is rotated using this heat. With respect to a sunlight concentrating system essential for this solar thermal power generation, various techniques have been proposed.

For example, Patent Document 1 discloses an aluminum alloy sheet material used for forming a concave reflecting mirror for heliostat which is designed, as the above-mentioned optical means, so as to be easily manufactured without causing variation with time of reflecting characteristics, and a concave reflecting mirror for heliostat using the same and a manufacturing method thereof. The aluminum alloy sheet material includes an adhesive layer, a mirror surface layer, a weather-resistant transparent coating layer and a protection layer, which are successively provided on a surface of an aluminum alloy sheet. The concave reflecting mirror for heliostat is manufactured by pressing and deforming this aluminum alloy sheet material by use of a pair of molding dies composed of a concave die and a convex die through the use of a pressing apparatus so that the mirror surface side is concave, adhering the convex surface of the aluminum alloy sheet material to a concave surface of a base having the concave surface formed thereon through an adhesion means, and then removing the protection layer. Since the protection layer is provided on the upper surface side of the mirror surface layer in the aluminum alloy sheet material, the mirror surface layer can be prevented from being damaged during the manufacturing process, and even after the mirror is installed with the protection layer being peeled, the mirror surface layer can be prevented from being damaged by the weather-resistant transparent coating layer as described above. Thus, the concave reflecting mirror for heliostat can be easily manufactured by press molding while preventing the variation with time of reflecting characteristics in the mirror surface layer of the concave reflecting mirror for heliostat.

However, the method for manufacturing the concave reflecting mirror for heliostat of Patent Document 1 has problems in which not only a pressing apparatus and a molding die which largely increase the cost are needed, but also the manufacturing is complicated due to increased manufacturing steps associated with press work.

Further, the method for manufacturing the concave reflecting mirror by press molding has a limitation in accurate formation of the concave surface of the reflecting mirror in view of the elasticity of a sheet material such as the aluminum alloy sheet material.

CITATION LIST

PATENT DOCUMENT

PATENT DOCUMENT 1: Japanese Patent Application Laid-Open No. 2002-154179

SUMMARY OF INVENTION

TECHNICAL PROBLEM

The present invention has an object to provide a concave reflecting mirror for heliostat, which can be easily manufactured without needing a pressing apparatus and a molding die while having a highly accurate concave surface formed therein, and a method for manufacturing the same.

SOLUTION TO PROBLEM

A concave reflecting mirror for heliostat according to the present invention comprises: a reflecting member which includes a mirror surface section provided on the front surface of a base material and which is elastically deformable with rigidity differed by location from the center to the periphery so that the mirror surface section forms a concave paraboloidal surface; a frame member which supports the periphery of the rear surface of the reflecting member; and an adjusting member which is attached to the frame member at a position facing substantially the center of the rear surface or front surface of the reflecting member and which elastically deforms the reflecting member by pulling the rear surface of the reflecting member or pressing the front surface of the reflecting member. Otherwise, the concave reflecting mirror comprises a frame member which includes a mirror surface section provided on the front surface of a base material and which has rigidity lower at the periphery than at the center and is elastically deformable; a frame member which supports the periphery of the rear surface of the reflecting member; and an adjusting member which is attached to the frame member at a position facing substantially the center of the rear surface or front surface of the reflecting member and which elastically deforms the reflecting member by pulling the rear surface of the reflecting member or pressing the front surface of the reflecting member.

The support of the reflecting member may be at least three-point support, including multi-point support beyond three points and entire circumferential support by a continuous line. Further, rotary support and immovable support may be adopted.

According to this structure, the adjusting member attached to the frame member pulls the rear surface of the reflecting member or presses the front surface of the reflecting member in a state where the periphery of the rear surface of the reflecting member is supported by the frame member. Thus, the reflecting member is elastically deformed and the mirror surface section forms a concave surface, preferably, a concave paraboloidal surface. Since the concave reflecting mirror is formed by pulling the rear surface of the elastically deformable reflecting member or pressing the front surface thereof by the adjusting member, the concave reflecting mirror can be easily manufactured without requiring a pressing apparatus and a molding die while having a highly accurate concave surface formed therein.

It is preferred that the reflecting member has a circular outer shape and is formed so that the thickness of the rear surface is reduced from the center to the periphery. According to this, the reflecting member can be easily fabricated so that the rigidity at the periphery is lower than the rigidity at the center without complicate and high-accuracy processing of the rear surface of the reflecting member.

It is preferred that the reflecting member includes a flat plate section having a square outer shape and a uniform thickness, and a plurality of radial rib portions which are provided in a protruding condition respectively along diagonals on the rear surface of the flat plate section and each between the diagonals and which have rigidity reduced from the center to the periphery; and the reflecting member is supported at four or more fulcrum points including, among the plurality of radial rib portions, at least four fulcrum points provided at the square corner-side tips of the radial rib portions disposed along the diagonals. According to this structure, the flat plate section is elastically deformed along the shape of the radial rib portions protruded from the rear surface. The radial rib portions are elastically deformed so as to form a paraboloidal surface while being supported at the fulcrum points provided at the periphery-side tips since the rigidity thereof is reduced from the center to the periphery. Thus, the reflecting member is elastically deformed so as to form a paraboloidal surface. Since a concave reflecting mirror is formed by pulling the rear surface of the reflecting member which has a square outer shape and is elastically deformable or pressing the front surface thereof by the adjusting member, the concave reflecting mirror can be easily manufactured without requiring a pressing apparatus and a molding die while having a highly accurate concave surface formed therein.

It is preferred that the reflecting member includes a flat plate section having a square outer shape and a uniform thickness, and a plurality of radial rib portions which are provided in a protruding condition respectively along diagonals on the rear surface of the flat plate section and each between the diagonals and which have rigidity reduced from the center to the periphery; four fulcrum points to be supported by the frame member are provided at the square corner-side tips of the radial rib portions disposed along the diagonals among the plurality of radial rib portions; and a peripheral rib portion is provided so as to mutually connect these fulcrum points. According to this structure, the flat plate portion is elastically deformed along the shape of the radial rib portions protruded from the rear surface. The radial rib portions are elastically deformed so as to form a paraboloidal surface while being supported at the fulcrum points on the square corner side since the rigidity thereof is reduced from the center toward the periphery. Accordingly, the reflecting member is elastically deformed. Since the fulcrum points are provided at the corners located at an equal distance from the center, all the fulcrum points of the reflecting member abut on the frame member when the center of the rear surface of the reflecting member is pulled or the center of the front surface of the reflecting member is pressed, and the reflecting member can be thus stably supported by the frame member. This support allows formation of a symmetric concave surface. The concave surface can be made into a paraboloidal surface by properly setting the rigidity of the radial rib portions and the rigidity of the peripheral rib portion.

Each of the radial rib portions is preferably formed so that the value of $bh^3$ is substantially proportional to the distance from the fulcrum point, wherein h is the protruding height from the rear surface of the flat plate section of the radial rib portion and b is the width thereof. This allows the reflecting member to be elastically deformed so as to form substantially a paraboloidal surface.

Preferably, the plurality of adjacent radial ribs is mutually connected by an auxiliary rib portion. This allows the radial rib portions to be prevented from buckling.

A method for manufacturing a concave reflecting mirror for heliostat according to the present invention comprises: forming a reflecting member which includes a mirror surface section provided on the front surface of a base material and which is elastically deformable with rigidity differed by location from the center to the periphery so that the mirror surface section forms a concave paraboloidal surface; supporting the periphery of the rear surface of the base material of the reflecting member by a flame member; and elastically deforming the reflecting member by pulling substantially the center of the base material on the rear surface or pressing substantially the center of the mirror surface section on the front surface of the reflecting member by an adjusting member provided on the frame member. Further, a method for manufacturing a concave reflecting mirror for heliostat according to the present invention comprises: forming a reflecting member which includes a mirror surface section provided on the front surface of a base material and which has rigidity lower at the periphery than at the center and is elastically deformable; supporting the periphery of the rear surface of the base material of the reflecting member by a frame member; and elastically deforming the reflecting member by pulling substantially the center of the base material on the rear surface of the reflecting member or pressing substantially the center of the mirror surface section on the front surface of the reflecting member by the adjusting member provided on the frame member.

A method for manufacturing a concave reflecting mirror for heliostat according to the present invention comprises: forming a reflecting member which is elastically deformable so that a mirror surface section forms a concave paraboloidal surface, the mirror surface section being formed on the front surface of a base material which has a circular outer shape and is formed so that thickness of the rear surface thereof is reduced from the center to the periphery; supporting the periphery of the rear surface of the base material of the reflecting member by a frame member with an adjusting member being attached thereto; and elastically deforming the reflecting member by pulling substantially the center of the base material on the rear surface of the reflecting member or pressing substantially the center of the mirror surface section on the front surface of the reflecting member by the adjusting member provided on the frame member.

A method for manufacturing a concave reflecting mirror for heliostat according to the present invention comprises: forming a reflecting member which is elastically deformable so that a mirror surface section forms a concave paraboloidal surface, the mirror surface section being formed on the front surface of a flat plate section with a uniform thickness which has a square outer shape and includes a plurality of radial rib portions provided in a protruding condition respectively along diagonals on the rear surface and each between the diagonals, the radial rib portions being reduced in rigidity from the center to the periphery and having four or more fulcrum points including at least four fulcrum points provided at the tips on the square corner side; supporting the periphery of the rear surface of the base material of the reflecting member at the fulcrum points by a frame member with an adjusting member being attached thereto; and elastically deforming the reflecting member by pulling substantially the center of the base material on the rear surface of the reflecting member or pressing substantially the center of the mirror surface section on the front surface of the reflecting member by the adjusting member provided on the frame member.

A method for manufacturing a concave reflecting mirror for heliostat according to the present invention comprises: forming a reflecting mirror which is elastically deformable so that a mirror surface section forms a concave paraboloidal surface, the mirror surface section being formed on the front surface of a flat plate section with a uniform thickness which has a square outer shape and includes a plurality of radial rib portions provided in a protruding condition on the rear surface along the diagonals of the square and each between the diagonals, the radial rib portions being reduced in rigidity from the center to the periphery and having four fulcrum points at the square corner-side tips thereof, and a peripheral rib portion provided to mutually connect the fulcrum points; supporting the periphery of the rear surface of the base material of the reflecting member by the frame member at the fulcrum points by a frame member with an adjusting member being attached thereto; and elastically deforming the reflecting member by pulling substantially the center of the base material on the rear surface of the reflecting member or pressing substantially the center of the mirror surface section on the front surface of the reflecting member by the adjusting member provided on the frame member.

ADVANTAGEOUS EFFECTS OF INVENTION

According to the present invention, the adjusting member attached to the frame member pulls the rear surface of the reflecting member or presses the front surface of the reflecting member in a state where the periphery of the rear surface of the reflecting member is supported by the frame member. Thus, the reflecting member is elastically deformed, and the mirror surface section forms a concave surface, preferably, a paraboloidal surface. Since a concave reflecting mirror is formed by pulling the rear surface of the elastically deformable reflecting member or pressing the front surface thereof by the adjusting member, the concave reflecting mirror can be easily manufactured without requiring a pressing apparatus and a molding die while having a highly accurate concave surface formed therein.

BRIEF DESCRIPTION OF DRAWINGS

[Fig. 1] Fig. 1 is a plan view of a concave reflecting mirror for heliostat according to a first embodiment of the present invention.

[Fig. 2] Fig. 2 is a cross-sectional view taken along line II-II of Fig. 1.

[Fig. 3] Fig. 3 is a view showing a reflecting member in the concave reflecting mirror for heliostat.

[Fig. 4] Fig. 4 is a view showing a comparison between the theoretical diameter of sun and a diameter of image by mirror reflection.

[Fig. 5] Fig. 5 is a view showing a reflection of sunlight by a mirror.

[Fig. 6] Fig. 6 is a view showing a relationship between the maximum amount of displacement of mirror surface and the distance to a heated portion in a case where the mirror diameter is 1 m.

[Fig. 7] Fig. 7 is a view schematically showing a disk in which a load is concentrated on the center with the outer circumference being simply supported.

[Fig. 8] Fig. 8 is a view showing a relationship between the distance from the center and the amount of deflection in a disk with concentration of load on the center.

[Fig. 9] Fig. 9 is a view showing a disk in which the plate thickness is varied from element to element.

[Fig. 10] Fig. 10 is a view showing a comparison between deflection curve of disk and parabola in a disk with a uniform plate thickness.

[Fig. 11] Fig. 11 is a view showing a comparison between deflection curve of disk and parabola in a disk with varied plate thicknesses.

[Fig. 12] Fig. 12 is a view showing a disk formed by stacking three same-thickness plates having different diameters.

[Fig. 13] Fig. 13 is a view showing an assembled state of the reflecting mirror in the first embodiment before a concave surface is formed.

[Figs. 14] Fig. 14 (a) and Fig. 14(b) are views showing a modification example of the concave reflecting mirror for heliostat of the first embodiment.

[Fig. 15] Fig. 15 is a plan view of a concave reflecting mirror for heliostat according to a second embodiment of the present invention.

[Fig. 16] Fig. 16 is a cross-sectional view taken along line XVI-XVI of Fig. 15.

[Fig. 17] Fig. 17 is a view showing a reflecting member in the second embodiment.

[Fig. 18] Fig. 18 is a view showing a model of a radial rib portion which is simply supported.

[Figs. 19] Fig. 19(a) is a view showing a parabola formed by a reflecting member which is supported at a midpoint between non-diagonal corners and at another midpoint located on a line passing through the above-mentioned midpoint and the center, and Fig. 19(b) is a view showing a gap formed at diagonal corners when the reflecting member forms the same parabola as in Fig. 19(a).

[Fig. 20] Fig. 20 is a view showing a support structure of the reflecting member by a frame member at a corner.

[Fig. 21] Fig. 21 is a view showing a range of the reflecting member which is analyzed by finite element analysis.

[Fig. 22] Fig. 22 is a view showing a displacement of a model 1.

[Fig. 23] Fig. 23 is a view showing an inclination which is analyzed by the model 1.

[Fig. 24] Fig. 24 is a view showing a displacement of a model 2.

[Fig. 25] Fig. 25 is a view showing an inclination which is analyzed by the model 2.

[Fig. 26] Fig. 26 is a view showing a displacement of a model 3.

[Fig. 27] Fig. 27 is a view showing an inclination which is analyzed by the model 3.

[Fig. 28] Fig. 28 is a view showing a reflecting member which is designed based on analysis results by the finite element method.

[Fig. 29] Fig. 29 is a view showing an assembled state of the reflecting mirror in the second embodiment before a concave surface is formed.

[Fig. 30] Fig. 30 is a view showing a model of a radial rib portion which is supported in a stationary manner.

[Fig. 31] Fig. 31 is a view showing a model of another radial rib portion which is supported in a stationary manner.

[Fig. 32] Fig. 32 is a view showing a comparison of deflection curves of two models with a parabola.

[Fig. 33] Fig. 33 is a plan view of a concave reflecting mirror for heliostat according to a third embodiment of the present invention.

[Fig. 34] Fig. 34 is a cross-sectional view taken along line XXXIV-XXXIV of Fig. 33.

[Fig. 35] Fig. 35 is a view showing a reflecting member in the third embodiment.

[Fig. 36] Fig. 36 is a view showing a part of the reflecting member.

[Fig. 37] Fig. 37 is a view showing a model of a peripheral rib portion to which the tips of radial rib portions are connected.

[Fig. 38] Fig. 38 is a view showing a model of a peripheral rib portion with extremely low rigidity.

[Fig. 39] Fig. 39 is a view showing a model of a peripheral rib portion with extremely high rigidity.

[Fig. 40] Fig. 40 is a view showing a model of a peripheral rib portion with adjusted rigidity.

[Fig. 41] Fig. 41 is a cross-sectional view of a further embodiment of the present invention.

[Fig. 42] Fig. 42 is a cross-sectional view of another embodiment of the present invention.

[Fig. 43] Fig. 43 is a perspective view of a radial rib portion of another embodiment.

DESCRIPTION OF EMBODIMENTS

Preferred embodiments of the present invention will be described in reference to the drawings.

1. First Embodiment

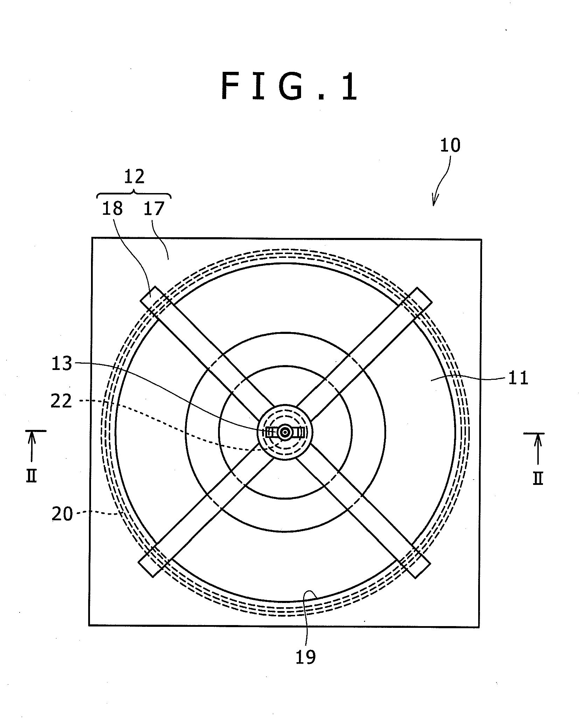

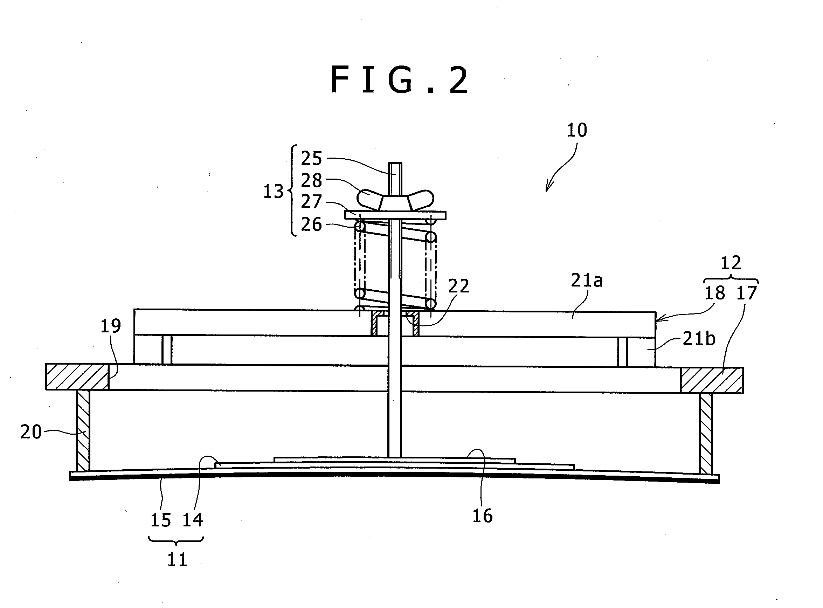

Figs. 1 and 2 show a concave reflecting mirror 10 for heliostat according to a first embodiment of the present invention. The concave reflecting mirror 10 for heliostat comprises a reflecting member 11, a frame member 12 and an adjusting member 13.

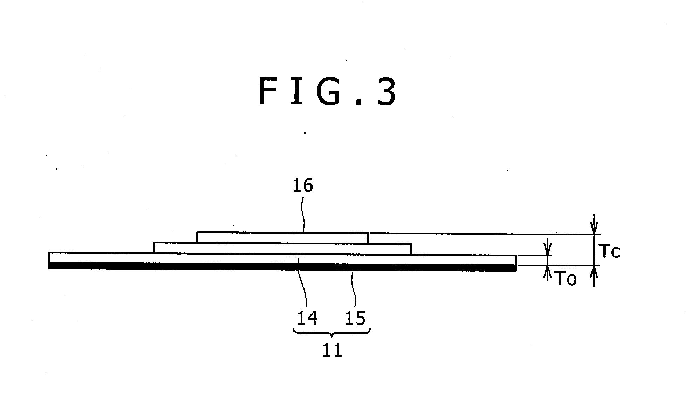

The reflecting member 11 includes a mirror surface section 15 provided on the front surface of a base material 14 having a circular outer shape. The rear surface 16 of the base material 14 of the reflecting member 11 is formed, as shown in Fig. 3, so that the thickness is reduced stepwise from the center to the periphery. Namely, the rear surface is formed so that a peripheral thickness To is smaller than a central thickness Tc. The base material 14 has rigidity lower at the periphery than at the center and is elastically deformable so that the mirror surface section 15 forms a concave paraboloidal surface. The base material 14 of the reflecting member 11 may be formed in an integrated manner or formed by stacking plates having different diameters. The mirror surface section 15 may be formed by any method of mirror surface processing, vapor deposition of silver, adhesion of a mirror sheet and the like. A tip of a rod 25 of the adjusting member 13 which will be described later is joined to the center of the rear surface 16 of the reflecting member 11.

The frame member 12 includes a support frame section 17 and an attachment frame section 18.

The support frame section 17 is composed of a flat plate having a square outer shape and includes a circular through-hole 19 formed at the center. The diameter of the through-hole 19 may be smaller than the outside diameter of the reflecting member 11 and large enough to insert the rod 25. The support frame section 17 includes an annular rib 20 which supports the outer periphery of the reflecting member 11 over the whole circumference. The diameter of the annular rib 20 is smaller than the outside diameter of the reflecting member 11 and larger than the diameter of the through-hole 19.

The attachment frame section 18 includes a cross beam portion 21a passing through the center of the through-hole 19, and a leg portion 21b. An insert hole 22 for inserting the rod 25 of the adjusting member 13 is provided in the beam portion 21a on the axis of the through-hole 19. The attachment frame section 18 is designed so that strength enough for the reflecting member 11 to maintain the concave surface-formed state can be secured. The beam portion 21a of the attachment frame section 18 is provided so as not to interfere with the rear surface 16 when the reflecting member 11 forms the concave surface, although it may be spaced from the flat plate portion of the support frame section 17 or not so.

The adjusting member 13 includes the rod 25, a spring 26, a washer 27 and an adjusting nut 28.

One end of the rod 25 is joined to the center of the rear surface 16 of the reflecting member 1. The other end side of the rod 25 is threaded in an adjustment range for the reflecting member 11 to form a paraboloidal surface. The rod 25 is inserted to the insert hole 22 of the beam portion 21a of the attachment frame section 18. The adjusting nut 28 to abut on the washer 27 is screwed to the other end of the rod 25 so that the spring 26 is held between the attachment frame section 18 of the frame member 12 and the washer 27. The rod 25 is moved in the axial direction of the through-hole 19 of the frame member 12, whereby a force is applied to the reflecting member 11 for deformation. The spring constant of the spring 26 in this embodiment is 45 kg/mm. The adjusting nut 28 of the adjusting member 13 is adjusted to a position where the reflecting member 11 forms a desired paraboloidal surface. The desired paraboloidal surface is determined depending on the position of focal point.

[Concave Design]

The concave design method for the mirror surface section 15 of the reflecting member 11 to form a paraboloidal surface will be then described.

(Mirror Surface Shape)

It is simulated that sunlight is reflected by a planar mirror and thrown onto a heated portion from a distance L. The radius rs of image of the sun in the heated portion is expressed in the following equation when the semidiameter of the sun is $\alpha$.
[Mathematical Form 1]

$$r_S = L\alpha$$

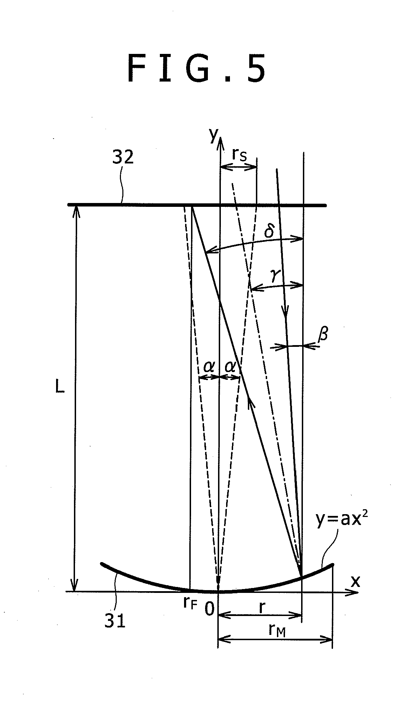

For efficient concentration of the solar heat, the light reflected by the mirror is required to be put in the range of the radius rs in the theoretical value.

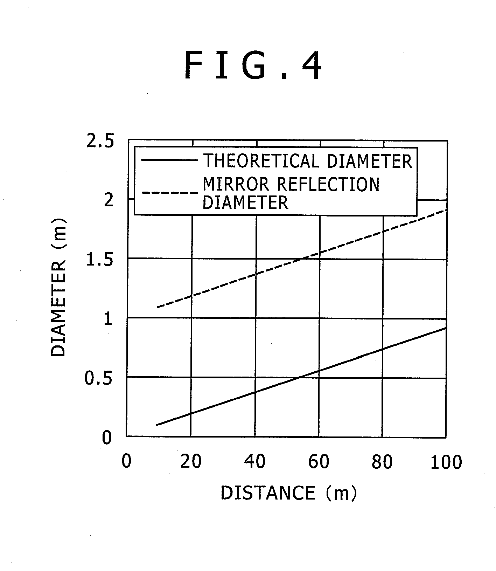

Fig. 4 shows a comparison between the theoretical diameter of the sun (theoretical diameter rs) and the diameter of the image by mirror reflection (mirror reflection diameter) in a case where the mirror diameter is 1 m. The horizontal axis indicates the distance from the mirror to the heated portion. The size of the image is more than twice even when the heated portion is separated 100 m from the mirror, suggesting a considerable reduction in energy density. Therefore, in the present invention, a concave mirror is adopted to prevent the reduction in energy density of the sunlight. The concave shape of the concave mirror will be then described.
As shown in Fig. 5, a tangential direction passing through the center of a mirror 31 as an origin is taken as x, and a normal direction passing therethrough is taken as y. The cross-sectional shape of the mirror 31 is a parabola expressed in the following equation.
[Mathematical Form 2]

$$y = ax^2$$

A position $r_F$ where the light incident on the position of the radius r of the mirror 31 is reflected at an angle $\beta$ by the mirror 31 and thrown on a heated portion 32 is set so as to satisfy the following condition.
[Mathematical Form 3]

$$r_F \leq r_S \quad (-\alpha \leq \beta \leq \alpha)$$

The inclination y of the normal at the radius r is expressed in the following equation.
[Mathematical Form 4]

$$\gamma = \tan^{-1}(2ar)$$

The angle $\delta$ of the reflected light to the y-axis is expressed in the following equation.
[Mathematical Form 5]

$$\delta = 2\gamma - \beta$$

A formula of reflected light is expressed in the following equation.

[Mathematical Form 6]

$$y = -\frac{1}{\tan\delta}(x - r) + ar^2$$

The position $r_F$ where the reflected light is thrown on the heated portion is expressed in the following equation.

[Mathematical Form 7]

$$r_F = r + (ar^2 - L)\tan\delta$$

The following expressions are established if L»r.

[Mathematical Form 8]

$$\gamma \doteqdot 2ar, \quad \tan\delta \doteqdot \delta$$

The following equation is thus established.

[Mathematical Form 9]

$$r_F = r - L(4ar - \beta)$$

If the radius of the mirror 31 is $r_M$, the radius must satisfy the following conditions.

[Mathematical Form 10]

$$r_F = r_S, \quad a = 1/4L \text{ in } \beta = \alpha$$

$$r_F = -r_S, \quad a = 1/4L \text{ in } \beta = -\alpha$$

Therefore, a formula of parabola is expressed in the following equation.

[Mathematical Form 11]

$$y = x^2/4L$$

This equation indicates a parabola having a focal distance of L.

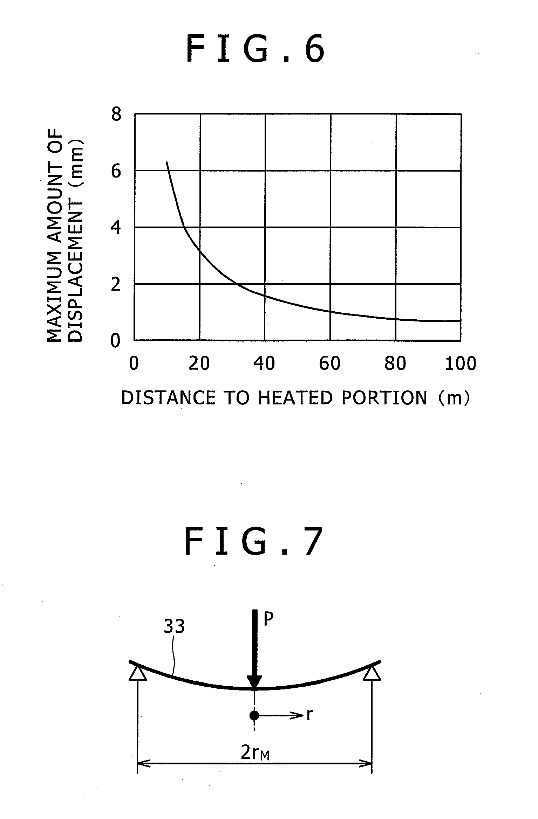

Fig. 6 shows a relationship between the maximum amount of displacement of the mirror surface and the distance to the heated portion in a case where the diameter of the mirror 31 is 1 m. The horizontal axis indicates the distance to the heated portion 32. The amount of displacement is very small, and it is found that it is hard to achieve such a concave surface by press molding as in the past.

(Concave Formation by Deflection)

In the method for manufacturing the concave reflecting mirror 10 for heliostat according to the present invention, the reflecting member 11 is deformed by applying a load onto substantially the center of the reflecting member 11, without using a pressing apparatus and a molding die.

For example, when the reflecting member is composed of a disk 33, and a concentrated load acts on the center thereof with the outer circumference being simply supported, a deflection w of the disk 33 is expressed in the following equation, wherein rM is the radius of the disk 33, and P is the load.

[Mathematical Formula 12]

$$w = \frac{Pr_M^2}{16\pi D}\left\{\frac{3+v}{1+v}\left(1-\frac{r^2}{r_M^2}\right) - 2\frac{r^2}{r_M^2}\ln\frac{r_M}{r}\right\}$$

In the equation,
[0048]

$$D = Eh^3/12(1-v^2)$$

E: Young's modulus
v: Poisson ratio
h: Thickness

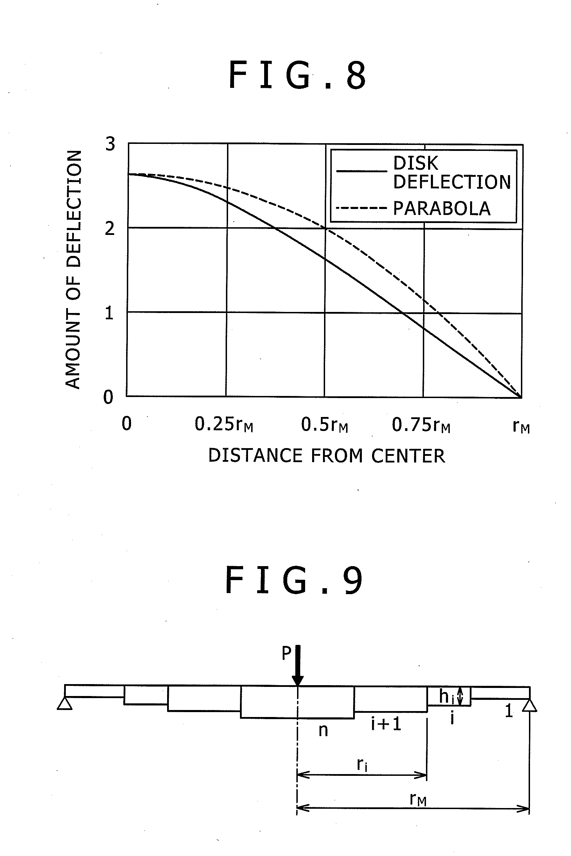

In a comparison between deflection curve and parabola with respect to a relationship between the distance from the center and the amount of deflection in the disk 33 with concentration of load on the center of the disk 33, the both are diverged from each other as shown in Fig. 8. Therefore, the deflection curve of the disk 33 is adjusted so as to be parabolic in shape.

(Deflection with Variation of Plate Thickness)

When a concentrated load P acts on the center of a disk as shown in Fig. 9, the inclination dw/dr, deflection w and moment (r-direction) $M_r$ of the disk at the i-th element i from the outer circumference are expressed respectively in the following general equations.

[Mathematical Formula 14]

$$\frac{dw}{dr} = \frac{P}{8\pi D_i} r(2\ln r - 1) + C_{i,1}r + \frac{C_{i,2}}{r}$$

$$w = \frac{P}{8\pi D_i} r^2(\ln r - 1) + \frac{C_{i,1}}{2}r^2 + C_{i,2}\ln r + C_{i,3}$$

$$M_r = \frac{P}{8\pi}\{2(1+v)\ln r + (1-v)\} + C_{i,1}(1+v)D_i$$

$$D_i = \frac{Eh_i^3}{12(1-v^2)}$$

In the equations, $C_{i,1}$, $C_{i,2}$, and $C_{i,3}$ are values determined by the following boundary conditions.

Element 1 (Outer circumferential portion of disk) Since $M_r$=0 in $r$=$r_M$

[Mathematical Form 15]

$$k = C_{1,1} = -\frac{P}{8\pi D_1}\left(2\ln r_M + \frac{1-v}{1+v}\right)$$

Since $w$=0 in $r$=$r_M$,

[Mathematical Form 16]

$$0 = \frac{P}{8\pi D_1} r_M^2(\ln r_M - 1) + \frac{k}{2}r_M^2 + C_{1,2}\ln r_M + C_{1,3}$$

$$C_{1,3} = \frac{P}{8\pi D_1} r_M^2(1 - \ln r_M) - \frac{k}{2}r_M^2 - C_{1,2}\ln r_M$$

Between element i and element i+1
Since w, dw/dr and $M_r$ are continuous in $r$=ri,

[Mathematical Form 17]

$$\frac{P}{8\pi D_i}r_i\left(2\ln r_i - 1\right) + C_{i,1}r_i + \frac{C_{i,2}}{r_i} = \frac{P}{8\pi D_{i+1}}r_i\left(2\ln r_i - 1\right) + C_{i+1,1}r_i + \frac{C_{i+1,2}}{r_i}$$

$$\frac{P}{8\pi D_i}r_i^2\left(\ln r_i - 1\right) + \frac{C_{i,1}}{2}r_i^2 + C_{i,2}\ln r_i + C_{i,3} = \frac{P}{8\pi D_{i+1}}r_i^2\left(\ln r_i - 1\right) + \frac{C_{i+1,1}}{2}r_i^2 + C_{i+1,2}\ln r_i + C_{i+1,3}$$

$$C_{i,1}D_i = C_{i+1,1}D_{i+1}$$

Element n (Central portion of disk)
Since w is finite in r=0,
[0057]

[Mathematical Form 18]

$$w = \frac{P}{8\pi D_n}r^2\left(\ln r - 1\right) + \frac{C_{n,1}}{4}r^2 + C_{n,2}\ln r + C_{n,3}$$

Thus, $C_{n,2}=0$
The above can be summarized as follows.
[Mathematical Form 19]

$$\frac{C_{1,2}}{r_1} - C_{2,1}r_1 - \frac{C_{2,2}}{r_1} = \frac{Pr_1(2\ln r_1 - 1)}{8\pi}\left(\frac{1}{D_2} - \frac{1}{D_1}\right) - kr_1$$

$$C_{1,2}(\ln r_1 - \ln r_M) - \frac{C_{2,1}}{2}r_1^2 - C_{2,2}\ln r_1 - C_{2,3} = \frac{Pr_1^2(\ln r_1 - 1)}{8\pi}\left(\frac{1}{D_2} - \frac{1}{D_1}\right) + \frac{Pr_M^2(\ln r_M - 1)}{8\pi D_1} - \frac{k}{2}(r_1^2 - r_M^2)$$

$$C_{2,1}D_2 = kD_1$$

$$\vdots$$

$$C_{i,1}r_i + \frac{C_{i,2}}{r_i} - C_{i+1,1}r_i - \frac{C_{i+1,2}}{r_i} = \frac{Pr_i(2\ln r_i - 1)}{8\pi}\left(\frac{1}{D_{i+1}} - \frac{1}{D_i}\right)$$

$$\frac{C_{i,1}}{2}r_i^2 + C_{i,2}\ln r_i + C_{i,3} - \frac{C_{i+1,1}}{2}r_i^2 - C_{i+1,2}\ln r_i - C_{i+1,3} = \frac{Pr_i^2(\ln r_i - 1)}{8\pi}\left(\frac{1}{D_{i+1}} - \frac{1}{D_i}\right)$$

$$C_{i,1}D_i - C_{i+1,1}D_{i+1} = 0$$

$$\vdots$$

$$C_{n-1,1}r_{n-1} + \frac{C_{n-1,2}}{r_{n-1}} - C_{n,1}r_{n-1} = \frac{Pr_{n-1}(2\ln r_{n-1} - 1)}{8\pi}\left(\frac{1}{D_n} - \frac{1}{D_{n-1}}\right)$$

$$\frac{C_{n-1,1}}{2}r_{n-1}^2 + C_{n-1,2}\ln r_{n-1} + C_{n-1,3} - \frac{C_{n,1}}{2}r_{n-1}^2 - C_{n,3} = \frac{Pr_{n-1}^2(\ln r_{n-1} - 1)}{8\pi}\left(\frac{1}{D_n} - \frac{1}{D_{n-1}}\right)$$

$$C_{n-1,1}D_{n-1} - C_{n,1}D_n = 0$$

(Definition of Coefficients)

The coefficient in each equation is substituted as follows.

[Mathematical Form 20]

$$C_1 = C_{1,2}$$
$$C_2 = C_{2,1}$$
$$C_3 = C_{2,2}$$
$$\vdots$$
$$C_{3(i-2)+1+j} = C_{i,j}$$
$$\vdots$$
$$C_{3(n-3)+4} = C_{3n-5} = C_{n-1,3}$$
$$C_{3n-4} = C_{n,1}$$
$$C_{3n-3} = C_{n,3}$$

Each coefficient is determined by a coefficient matrix. The equations are replaced to prevent diagonal terms of the coefficient matrix from being 0.

[Mathematical Form 21]

(Line 1)

$$\frac{C_1}{r_1} - C_2 r_1 - \frac{C_3}{r_1} = \frac{Pr_1(2\ln r_1 - 1)}{8\pi}\left(\frac{1}{D_2} - \frac{1}{D_1}\right) - k r_1$$

(Line 2)

$$C_2 D_2 = k D_1$$

(Line 3)

$$C_1(\ln r_1 - \ln r_M) - \frac{C_2}{2} r_1^2 - C_3 \ln r_1 - C_4 = \frac{Pr_1^2(\ln r_1 - 1)}{8\pi}\left(\frac{1}{D_2} - \frac{1}{D_1}\right) + \frac{Pr_M^2(\ln r_M - 1)}{8\pi D_1} - \frac{k}{2}\left(r_1^2 - r_M^2\right)$$

$$\vdots$$

(Line 3i-2)

$$\frac{C_{3i-4}}{2} r_i^2 + C_{3i-3}\ln r_i + C_{3i-2} - \frac{C_{3i-1}}{2} r_i^2 - C_{3i}\ln r_i - C_{3i+1} = \frac{Pr_i^2(\ln r_i - 1)}{8\pi}\left(\frac{1}{D_{i+1}} - \frac{1}{D_i}\right)$$

(Line 3i-1)

$$C_{3i-4}D_i - C_{3i-1}D_{i+1} = 0$$

(Line 3i)

$$C_{3i-4}r_i + \frac{C_{3i-3}}{r_i} - C_{3i-1}r_i - \frac{C_{3i}}{r_i} = \frac{Pr_i(2\ln r_i - 1)}{8\pi}\left(\frac{1}{D_{i+1}} - \frac{1}{D_i}\right)$$

(Line 3i-5)

$$\frac{C_{3n-7}}{2} r_{n-1}^2 + C_{3n-6}\ln r_{n-1} + C_{3n-5} - \frac{C_{3n-4}}{2} r_{n-1}^2 - C_{3n-3} = \frac{Pr_{n-1}^2(\ln r_{n-1} - 1)}{8\pi}\left(\frac{1}{D_n} - \frac{1}{D_{n-1}}\right)$$

(Line 3i-4)

$$C_{3n-7}D_{n-1} - C_{3n-4}D_n = 0$$

(Line 3i-3)

$$C_{3n-7}r_{n-1} + \frac{C_{3n-6}}{r_{n-1}} - C_{3n-4}r_{n-1} = \frac{Pr_{n-1}(2\ln r_{n-1} - 1)}{8\pi}\left(\frac{1}{D_n} - \frac{1}{D_{n-1}}\right)$$

Since this equation has no diagonal terms, multiplication by $r_{n-1}/2$ and subtraction of the following expression are performed thereon.

$$\frac{C_{3n-7}}{2} r_{n-1}^2 + C_{3n-6}\ln r_{n-1} + C_{3n-5} - \frac{C_{3n-4}}{2} r_{n-1}^2 - C_{3n-3} = \frac{Pr_{n-1}^2(\ln r_{n-1} - 1)}{8\pi}\left(\frac{1}{D_n} - \frac{1}{D_{n-1}}\right)$$

Consequently, the following expression is derived.

$$C_{3n-6}\left(\frac{1}{2}-\ln r_{n-1}\right)-C_{3n-5}+C_{3n-3}=-\frac{Pr_{n-1}^{2}}{16\pi}\left(\frac{1}{D_{n}}-\frac{1}{D_{n-1}}\right)$$

The above-mentioned system of equations of the coefficients is solved, whereby deflection of a disk with variation of plate thickness can be calculated.
The deflection of the disk is calculated according to the above-mentioned equations.

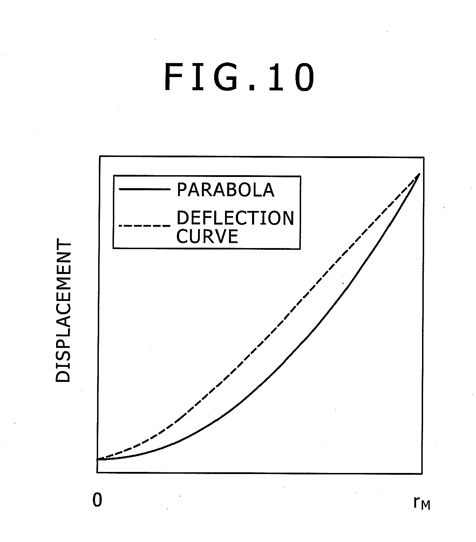

Fig. 10 shows a comparison between deflection curve of disk and parabola in a disk with a uniform plate thickness. It is found from the drawing that the deflection curve is considerably displaced from the parabola.

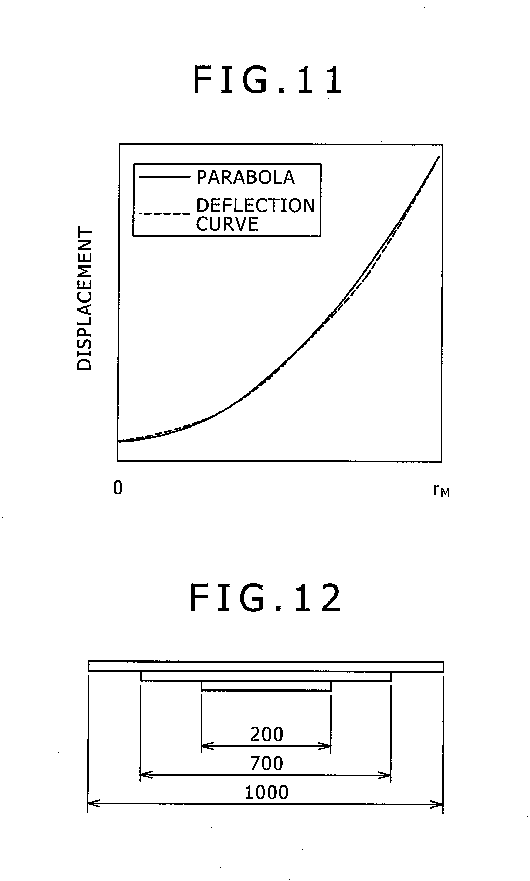

Fig. 11 shows a comparison between deflection curve of disk and parabola in a disk with varied plate thicknesses. This disk is formed by stacking three same-thickness plates having different diameters as shown in Fig. 12. Namely, the rear surface of the disk is formed in a stair-like shape from the center to the periphery so that the peripheral thickness is smaller than the central thickness. The diameter of the smallest plate is 200 mm, the diameter of the secondary small plate is 700 mm, and the diameter of the largest plate is 1,000 mm. This deflection curve is not completely consistent in shape with the parabola, but very close thereto. The maximum deflection of this disk is 2.1 mm/10 kg, which corresponds to a mirror having a focal distance of 30 m. In this way, the concave design can be performed so that the mirror surface section 15 of the reflecting member 11 forms a paraboloidal surface. Since the amount of deflection is proportional to a load in theory, even if the load is varied, without change in shape of the paraboloidal surface, the focal distance can be easily changed by varying the load. When the focal distance is constant, the load is constant regardless of the size of the plate. This is because the magnitude of the necessary load is canceled since the rigidity of the plate is deteriorated, when the plate is increased in size, while an increased load is needed to increase the amount of deflection.

[Manufacturing of Concave Reflecting Mirror for Heliostat]

The process of manufacturing the concave reflecting mirror 10 for heliostat will be then described.

(Formation of Reflecting Member)

The reflecting member 11 includes the base material 14, which is formed in an integrated manner by casting or by mutually stacking and joining plates differed in diameter so that the front surface is flat and the rear surface 16 is stepped from the center to the periphery. The mirror surface section 15 is formed on the front surface of the base material 14 by means of mirror surface processing, vapor deposition of silver and adhesion of a mirror sheet. The tip of the rod 25 of the adjusting member 13 is joined to the center of the rear surface 16 of the reflecting member 11 so as to extend in the axial direction of the rear surface 16 of the reflecting member 11.

(Attachment of Frame Member and Adjusting Member)

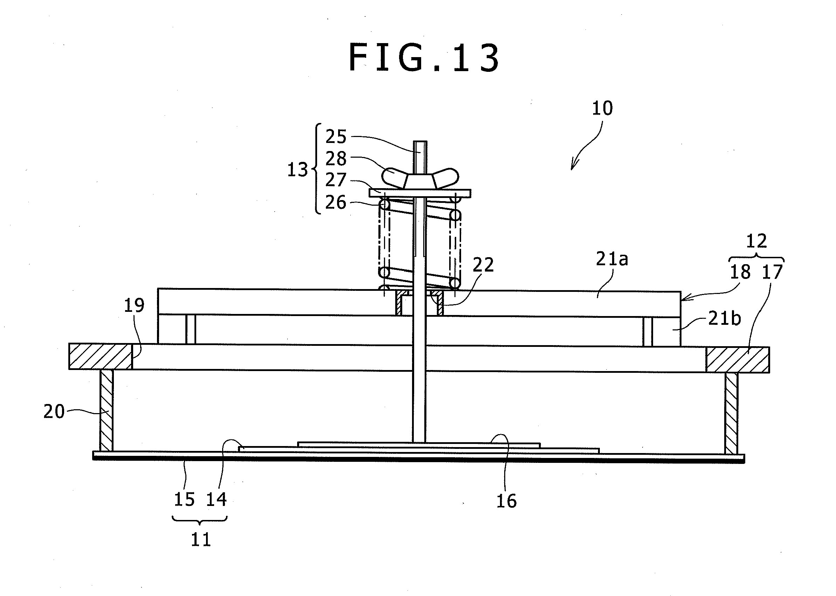

The reflecting member 11 is placed with the base material 14 upside as shown in Fig. 13. After the rod 25 of the adjusting member 13 joined to the rear surface 16 of the reflecting member 11 is inserted to the insert hole 22 of the attachment frame section 18 of the frame member 12, the frame member 12 is placed on the reflecting member 11 so that the annular rib 20 of the frame member 12 abuts on the rear surface 16 of the reflecting member 11 and the center of the reflecting member 11 is matched to the center of the frame member 12.

The spring 26 is placed on the attachment frame section 18 of the frame member 12 while substantially matching the axis of the spring 26 to the axis of the rod 25 of the adjusting member 13. Thereafter, the washer 27 is placed on the upper surface of the spring 26, and the adjusting nut 28 is screwed to the rod 25 of the adjusting member 13 until it abuts on the washer 27.

(Concave by Frame Member)

When the adjusting nut 28 is further screwed against the spring 26 abutting on the frame member 12, the distance between the rear surface 16 of the reflecting member 11 and the adjusting nut 28 is reduced, and the center of the rear surface 16 of the reflecting member 11 is raised. Thus, the reflecting member 11 is deformed so that the mirror surface section 15 side is concave. The adjusting nut 28 is screwed and adjusted until the reflecting member 11 forms a desired paraboloidal surface.

According to this, the rear surface 16 of the reflecting member 11 is pulled by the adjusting member 13 attached to the frame member 12 at a position facing substantially the center of the rear surface 16 of the reflecting member 11 in a state where the periphery of the rear surface 16 of the reflecting member 11 is supported by the frame member 12, whereby the reflecting member 11 with rigidity lower at the periphery than at the center can be elastically deformed so as to form a paraboloidal surface in the mirror surface section 15. Since a concave reflecting mirror is formed by pulling the rear surface 16 of the elastically deformable reflecting member 11 by the adjusting member 13, the concave reflecting mirror can be easily manufactured without requiring a pressing apparatus and a molding die while having a highly accurate concave surface formed therein.

[Modification Example]

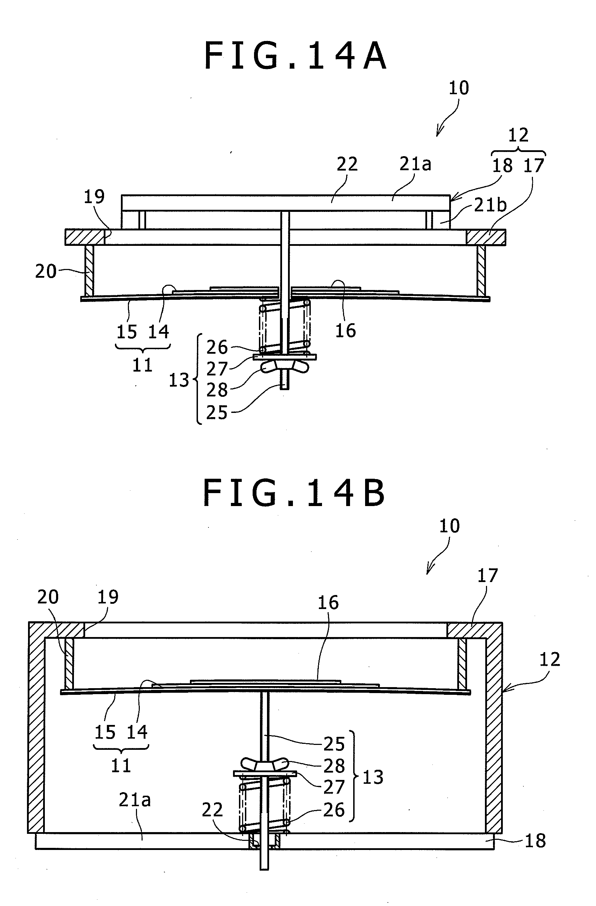

Figs. 14(a) and 14(b) show modification examples of the concave reflecting mirror 10 for heliostat of the first embodiment. In a concave reflecting mirror 10 for heliostat shown in Fig. 14(a), a through-hole is provided at the center of the reflecting member 11. The attachment frame member 18 of the frame member 12 is provided on the rear surface 16 side of the reflecting member 11, and the adjusting member 13 is provided on the mirror surface section 15 side of the reflecting member 11. One end of the rod 25 of the adjusting member 13 is joined to the attachment frame section 18 of the frame member 12. In a concave reflecting mirror 10 for heliostat shown in Fig. 14(b), the attachment frame section 18 of the frame member 12 and the adjusting member 13 are provided on the mirror surface section 15 side of the reflecting member 11. In both the concave reflecting mirrors 10 for heliostat, the reflecting member 11 is pressed from the mirror surface section 15 side by the adjusting member 13.

According to this, the front surface of the reflecting member 11 is pressed by the adjusting member 13 attached to the frame member 12 at a position facing substantially the center of the mirror surface section 15 on the front surface of the reflecting member 11 in a state where the periphery of the rear surface 16 of the reflecting member 11 is supported by the frame member 12, whereby the reflecting member 11 having rigidity lower at the periphery than at the center can be elastically deformed so as to form a paraboloidal surface in the mirror surface section 15. Since the concave reflecting mirror is formed by pressing the front surface of the elastically deformable reflecting member 11 by the adjusting member 13, the concave reflecting mirror can be easily manufactured without requiring a pressing apparatus and a molding die while having a highly accurate concave surface formed therein.

2. Second Embodiment

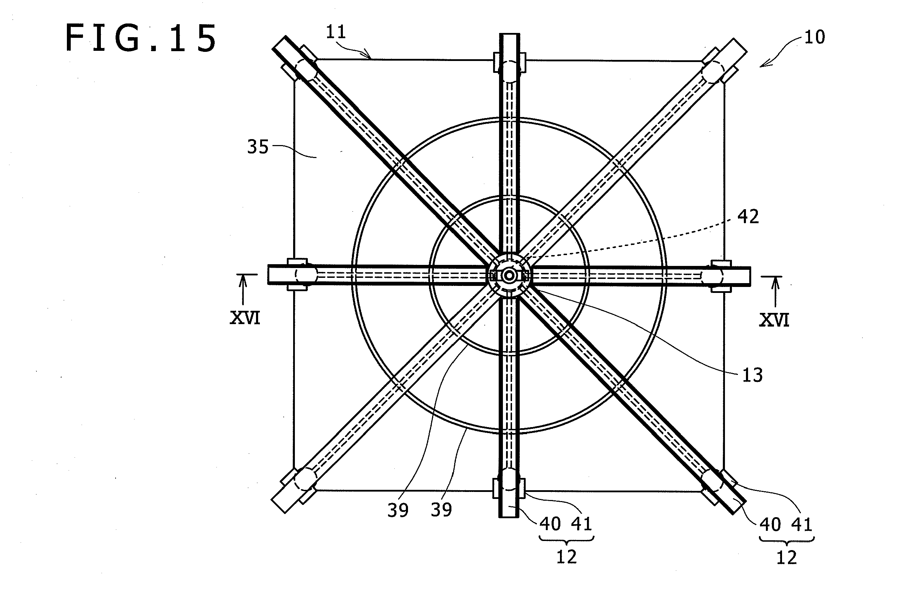

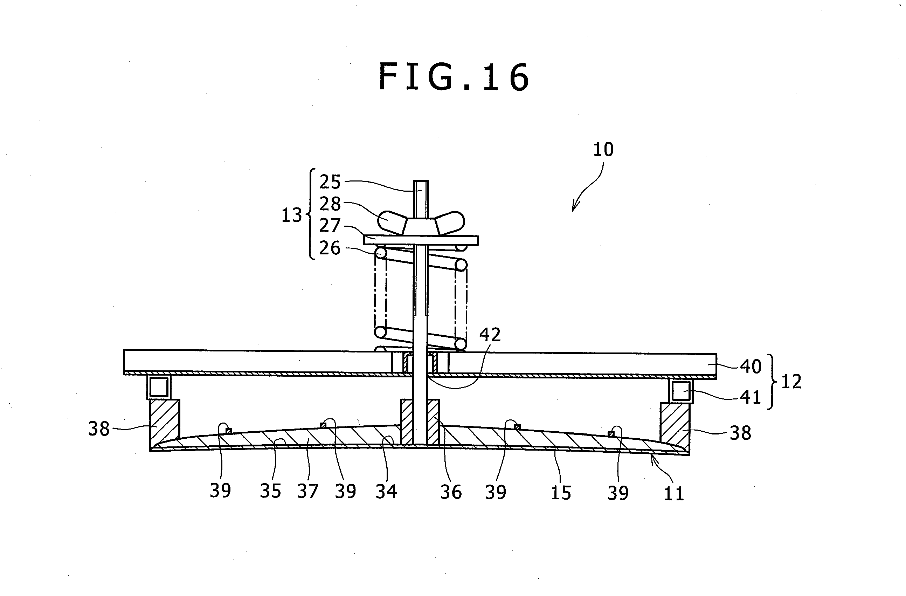

Fig. 15 and Fig. 16 show a concave reflecting mirror 10 for heliostat according to a second embodiment of the present invention. In this embodiment, the same reference numbers are assigned to the same components as in the first embodiment to omit descriptions therefor.

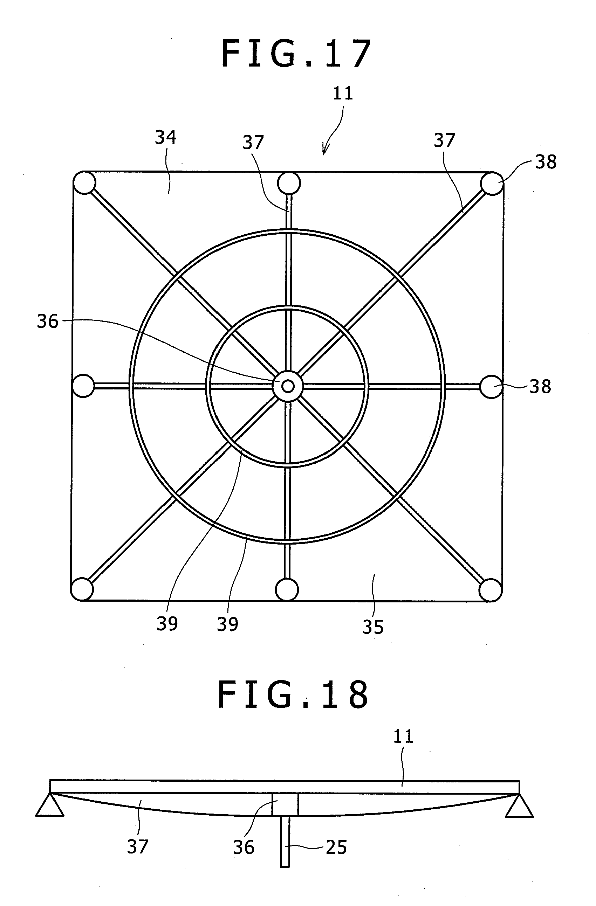

A reflecting member 11 includes a mirror surface section 15 which is provided on the front surface of a flat plate section 34 having a square outer shape and a uniform thickness. On the rear surface 35 of the flat plate section 34, a boss portion 36 is provided at the center and a plurality of radial rib portions 37 reduced in rigidity from the boss portion 36 at the center to the periphery are provided in a protruding condition respectively along the diagonals and along bisectors between the diagonals. Namely, the plurality of radial rib portions 37 are disposed at intervals of 45°. The radial rib portion 37 in this embodiment is reduced in height from the center to the periphery with a uniform width. A strut portion 38 is provided at the periphery-side tip of each radial rib portion 37. All strut portions 38 have the same size. A point on the end surface of the strut portion 38 acts as a fulcrum point for supporting a leg portion 41 of the frame member 12 which will be described later. The radial rib portion 37 is simply supported in the strut portion 38 at the tip as shown in Fig. 18. The reflecting member 11 has rigidity lower at the periphery than at the center and is elastically deformable so that the mirror surface section 15 forms a concave paraboloidal surface. The mirror surface section 15 may be formed by any method of, for example, mirror surface processing, vapor deposition of silver, adhesion of a mirror sheet and the like. A boss portion 36 on the rear surface 35 of the reflecting member 11 is internally threaded, and the tip of the rod 25 of the adjusting member 13 to be described later is screwed thereto. The adjusting member 13 with the rod 25 being screwed to the boss portion 36 is adjusted, whereby the paraboloidal surface is formed in the mirror surface section 15.

Each radial rib portion 37 is connected by an auxiliary rib portion 39 concentric to the boss portion 36. Namely, the adjacent radial rib portions 37 are connected to each other by the auxiliary rib portion 39. The radial rib portions 37 are connected to the auxiliary rib portion 39, whereby the radial rib portions 37 are prevented from buckling relative to the flat plate portion 34. The auxiliary rib portion 39 may be disposed only in a partial range although it is disposed to be concentrically connected to the boss portion 36 in this embodiment, and a one which can be connected at the same distance from the center, for example, a linear rib, may be adopted in addition to the annular rib. The auxiliary rib portion 39 may have any cross-sectional shape such as rectangle and circle without particularly limitation.

The frame member 12 is provided with the beam portion 40 and the leg portion 41. The beam portion 40 is provided in connection at the center so as to extend radially at intervals of 45°. The leg portion 41 is provided at a position on the beam portion 40 where it abuts on the strut portion 38 of the reflecting member 11. Namely, the frame member 12 supports the periphery of the rear surface 35 of the reflecting member 11 at eight points. A through-hole 42 is provided at the center of the beam portion 40. The frame member 12 is designed so that strength enough for the reflecting member 11 to maintain the concave formed state can be secured. The beam portion 40 of the frame member 12 never interferes with the boss portion 36 on the rear surface 35 of the reflecting member 11 when the reflecting member 11 forms a concave surface.

[Concave Design]

The concave design method for the mirror surface section 15 of the reflecting member 11 to form a paraboloidal surface will be then described.

When the reflecting member 11 has a square shape, a solution by the finite element method is required since no theoretical formula exists, differed from the first embodiment. In this embodiment, the paraboloidal surface is formed by setting the shape of the radial rib portions 37 in a theoretical manner to some extent.

The paraboloidal surface is a plane which is parabolically displaced in the radial direction and evenly displaced in the circumferential direction. In this embodiment, therefore, the shape is determined so that the radial rib portions 37 are deflected parabolically relative to the axis of the concave mirror.

Concretely, two radial rib portions 37 located on a line passing through the center are parabolically deflected, when a concentrated load acts on the center, in a state where the reflecting member 11 is supported at the fulcrum points of the strut portions 38 on both sides. A general expression of deflection is as follows, wherein x is the distance from the fulcrum point, and I is a cross-sectional secondary moment.

[Mathematical Form 22]

$$\frac{d^2 w}{dx^2} = \frac{Px}{2EI}$$

[Mathematical Form 23]

$$w = \frac{P}{2E} \int_0^x \int_0^x \frac{x}{I} dx + C_1 x + C_2$$

The condition where this equation becomes parabolic is:

[Mathematical Form 24]

$$\frac{x}{I} = \text{const}$$

Thus, I may be set so as to be I=ax. In this case, w is:

[Mathematical Form 25]

$$w = \frac{P}{2Ea} x^2 + C_1 x + C_2$$

Considering boundary conditions of x=0:w=0, x=$r_M$:dw/dx=0, w is:

[Mathematical Form 26]

$$w = \frac{P}{2Ea} x(x - 2r_M)$$

Thus, the deflection becomes a parabola with the loading point as the center. Since I=bh³/12, wherein h is the height of the radial rib portion 37 protruding from the rear surface 35 of the flat plate section 34, and b is the width thereof, the height h is set so as to satisfy the following when the width b is constant.

[Mathematical Form 27]

$$h \propto x^{1/3}$$

The rib shape is determined so as to have no difficulty in practice, although it is actually slightly displaced from the parabola since h=0 is impossible at x=0. According to this, the reflecting member 11 can be elastically deformed through the radial rib portions 37 so as to form substantially a parabola. In this embodiment, the value of bh³ may be set to a value substantially proportional to the distance from the fulcrum point although the height h is changed with the width b of the radial rib portion 37 being constant. Namely, both the width b and the height h can be changed in a range satisfying this condition.

Since the auxiliary rib portion 39 is connected to the radial rib portions 37, the shape of each of the radial rib portions 37 can be made hard to buckle. As more radial rib portions 37 are provided, the resulting concave gets closer to a paraboloidal surface. In this way, the concave can be designed so that the mirror surface section 15 of the reflecting member 11 forms the paraboloidal surface.

Since the reflecting member 11 in this embodiment has a square shape, as shown in Fig. 17, and the strut portions 38 are provided at the corners and at each midpoint between the corners, the distance from the center to the fulcrum point of the strut portion 38 is varied. Concretely, the distance from the center to the corner is √2 times the distance from the center to the midpoint. In this case, the following process is added to the above-mentioned design method.

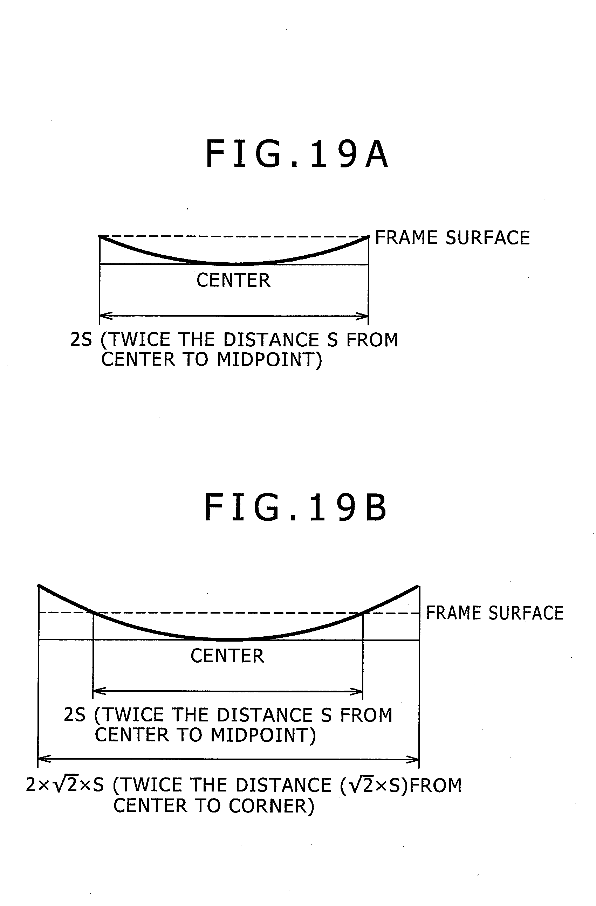

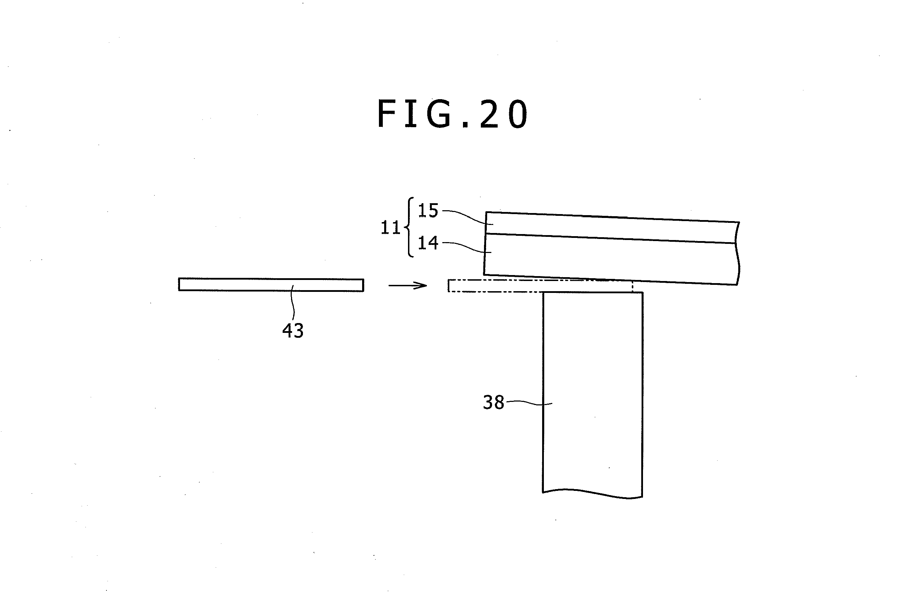

As shown in Fig. 19(a), when the strut portion 38 is allowed to abut on the leg portion 41 of the frame member 12 at the midpoint, a gap is formed between the strut portion 38 and the leg portion 41 of the frame member 12 at the corner as shown in Fig. 19(b). At the corner, therefore, a shim 43 is inserted to between the strut portion 38 and the leg portion 41 of the frame member 12 as shown in Fig. 20. According to this, the strut portion 38 can be allowed to abut on the leg portion 41 of the frame member 12, and the rear surface 35 of the reflecting member 11 can be supported by the frame member 12. Instead of the insertion of the shim 43, a method of forming the strut portion 38 at the corner so as to be larger in height than the strut portion 38 at the midpoint may be adopted.

Next, analysis results by the finite element method of models designed by the above-mentioned design method will be described.

(Analysis by Finite Element Method)

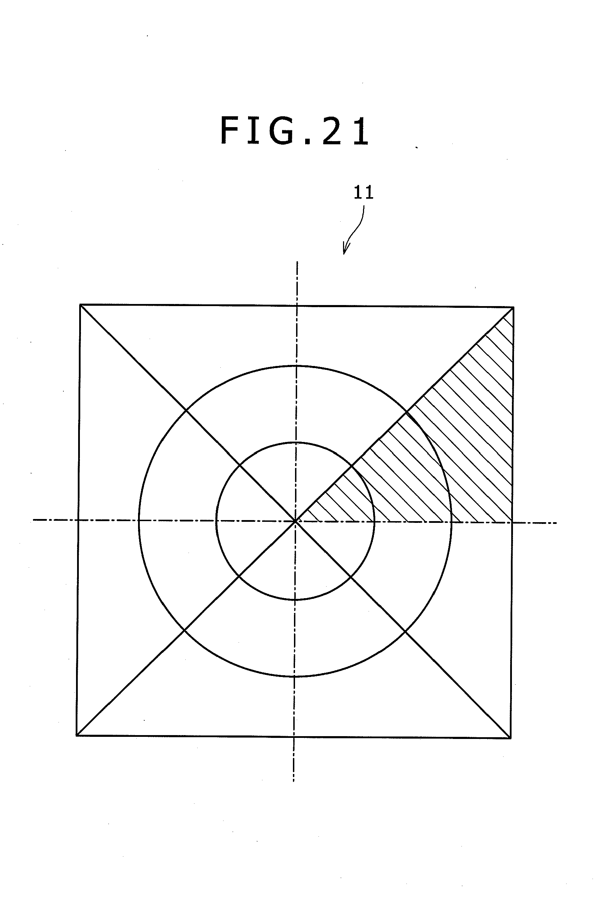

With respect to a hatched portion of Fig. 21, calculation is performed in a 1/8 model thereof. Since radial inclination is important in this analysis, determination is performed based on this inclination. The radial inclination of a paraboloidal surface is proportional to the radial position thereof (e.g., inclination is 2x in y=x²). Therefore, when the distribution of radial inclination indicates equally spaced concentric circles, an ideal paraboloidal surface is obtained.

(Model 1)

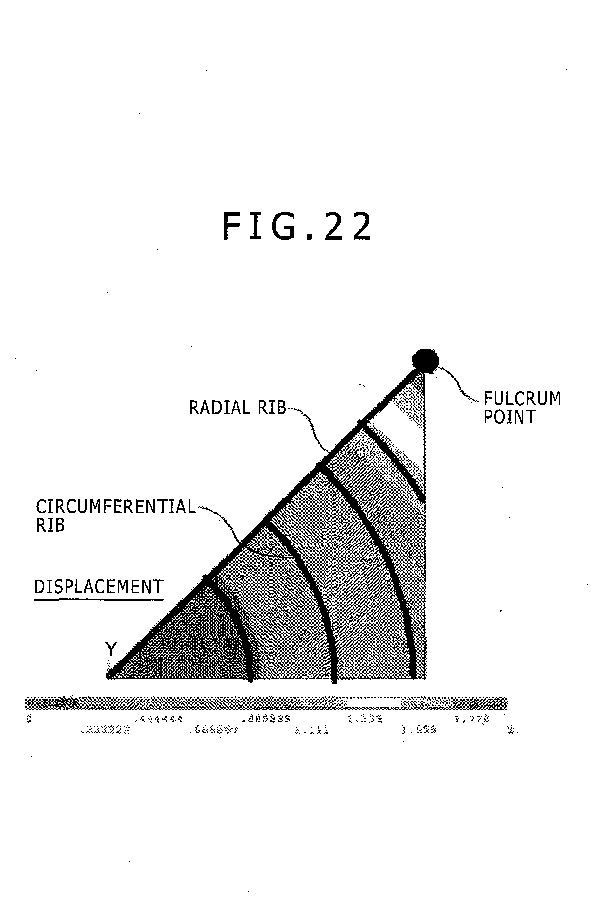

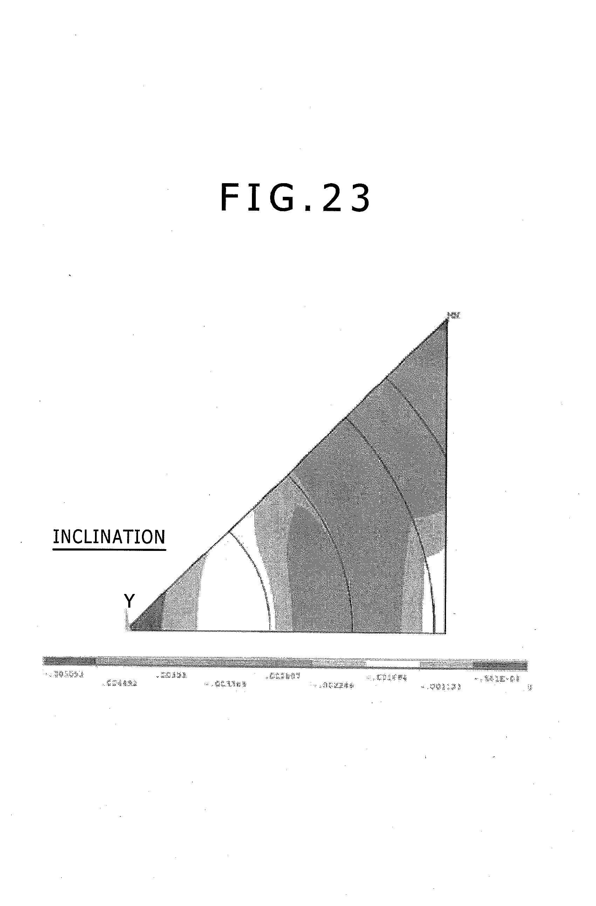

Model 1 includes, as shown in Fig. 22, a radial rib provided on an oblique side, a fulcrum point provided at a position corresponding to a square corner of the radial rib, and four circumferential ribs (auxiliary ribs). In this case, the displacement is concentric as shown in Fig. 22, but the inclination is not concentric as shown in Fig. 23. Therefore, even if the reflecting member is formed as this model, light convergence cannot be attained.

(Model 2)

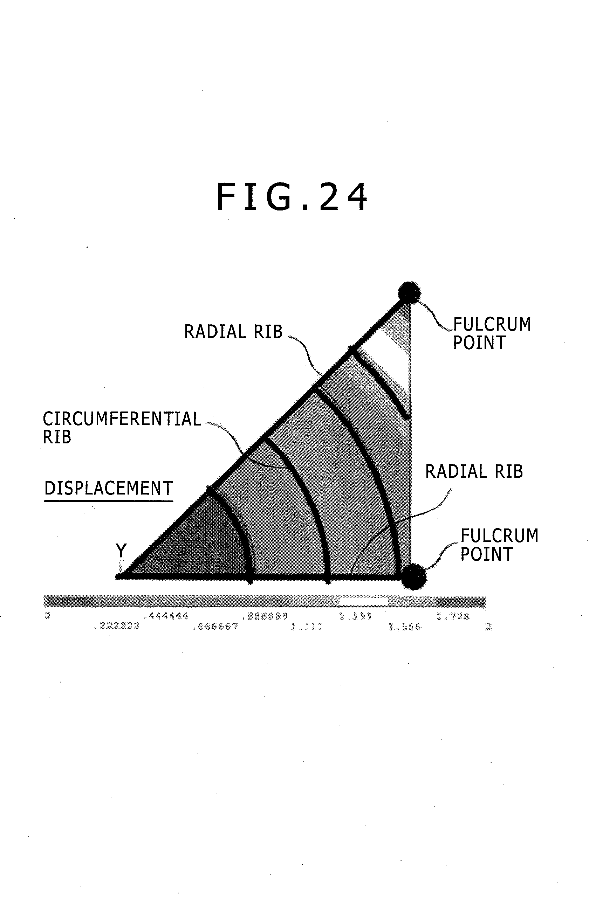

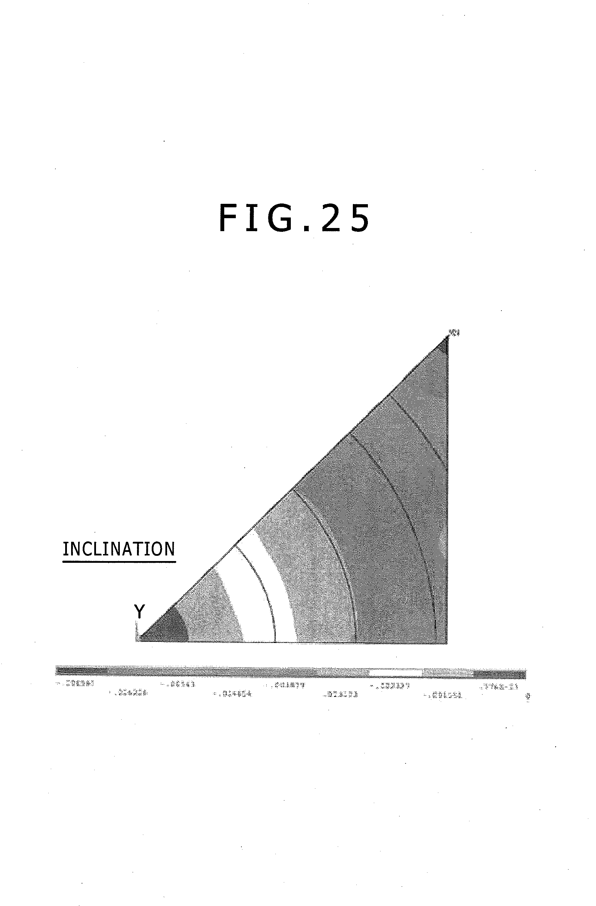

In Model 2, as shown in Fig. 24, a radial rib was added to a side that was not the oblique side in Model 1, and a fulcrum point was added to the non-center side of the radial rib. Since the displacement is concentric as shown in Fig. 24, and the inclination is also substantially concentric as shown in Fig. 25, substantially a paraboloidal surface is obtained. The outer circumferential portion is displaced from the paraboloidal surface.

(Model 3)

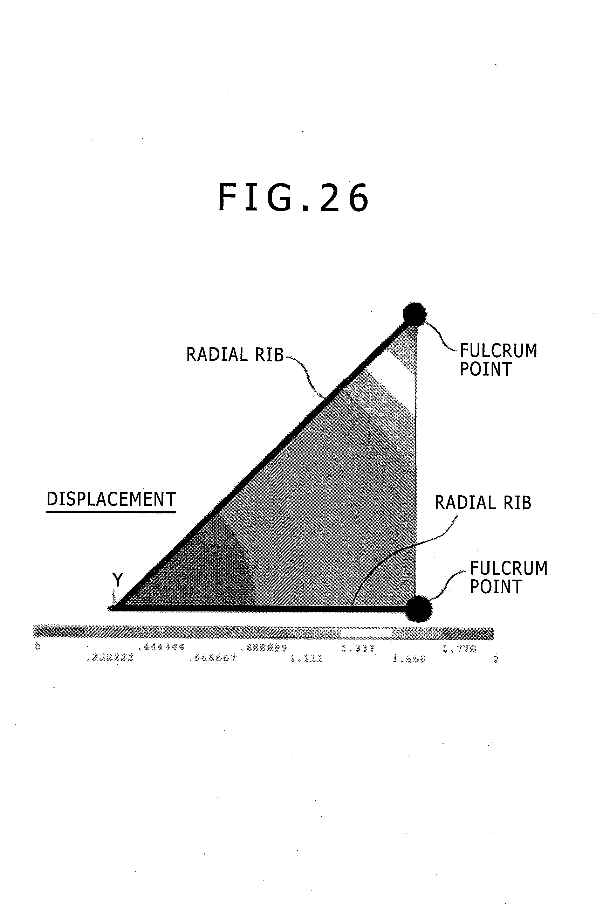

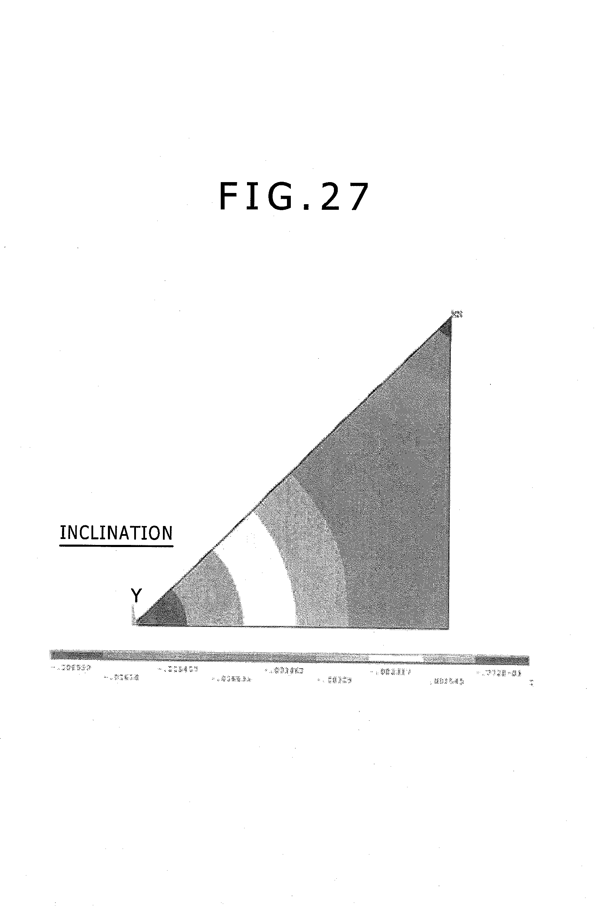

In Model 3, as shown in Fig. 26, the circumferential rib (auxiliary rib) was eliminated from Model 2. In this case, as shown in Fig. 27, the presence of the circumferential rib hardly affects the inclination, substantially similarly to Model 2. However, a slight change was observed in the outer circumferential portion.

(Final Rib Shape)

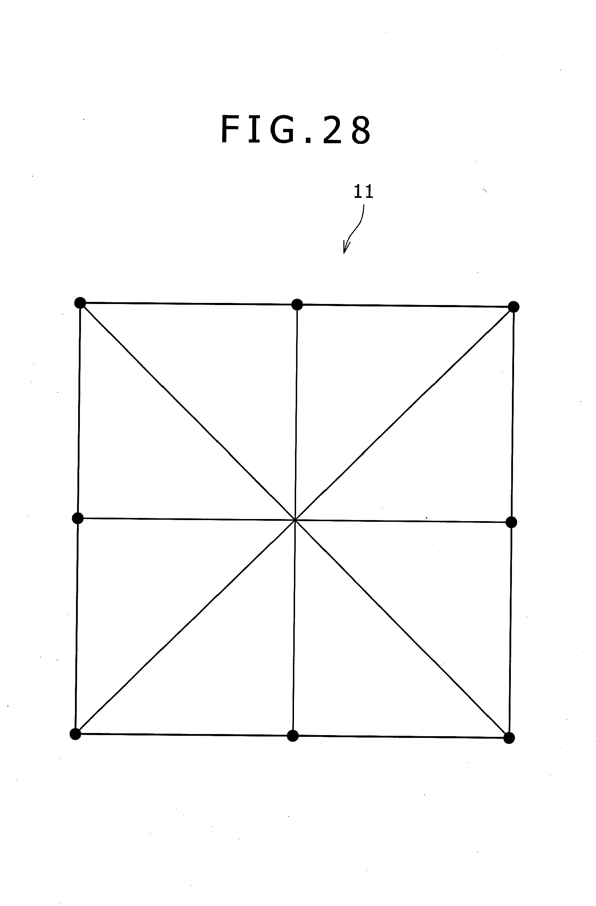

The analysis results by the finite element method show that it is adequate for the reflecting member 11 to provide radial ribs at intervals of 45°, as shown in Fig. 28, and to provide fulcrum points on the square corners at the tips of the radial ribs and on midpoints between the corners. Since the presence of the circumferential rib hardly affects the inclination, the circumferential ribs are not needed in forming the paraboloidal surface in the reflecting member 11. However, the auxiliary rib may be disposed for the purpose of preventing the buckling of the radial ribs. When the number of ribs is increased, the reflecting member may be formed by aluminum die casting or injection molding. In this case, a reduction in weight can be attained.

[Manufacturing of Concave Reflecting Mirror for Heliostat]

The process of manufacturing the concave reflecting mirror 10 for heliostat will be then described.

(Formation of Reflecting Member)

In the reflecting member 11, an internally threaded boss portion 36 is joined to the rear surface 35 of a flat plate having a square outer shape and a uniform thickness. Strut portions 38 are joined respectively to the square corners and midpoints between corners. A radial rib portion 37 with rigidity reduced from the center to the periphery is joined each between the boss portion 36 and the strut portion 38 at intervals of 45°. As the diagonal radial rib portions 37, those longer in length than the non-diagonal radial rib portions 37 are joined. An auxiliary rib portion 39 is disposed concentrically with the boss portion 36, and the auxiliary rib portion 39 is joined on the upper ends of the radial rib portion 37. A mirror surface section 15 is formed on the front surface of the flat plate by mirror surface processing, vapor deposition of silver and adhesion of a mirror sheet.

(Attachment of Frame Member and Adjusting Member)

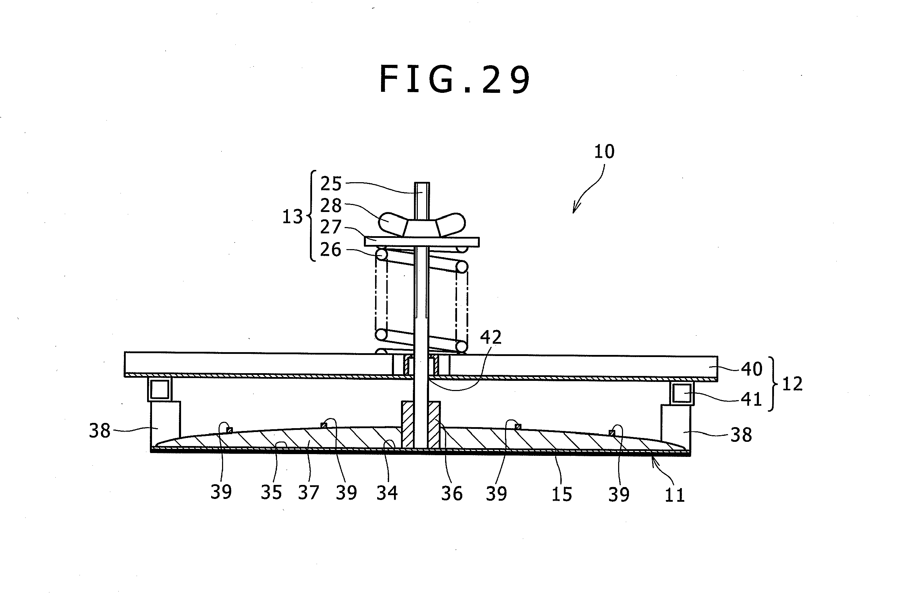

The reflecting member 11 is placed with the rear surface 35 upside as shown in Fig. 29. A rod 25 of an adjusting member 13 is screwed to the boss portion 36 of the reflecting member 11. After the rod 25 of the adjusting member 13 screwed to the rear surface 16 of the reflecting member 11 is inserted to a through-hole 42 of a beam portion 40 of a frame member 12, the frame member 12 is placed on the reflecting member 11 so that the leg portion 41 of the frame member 12 abuts on the strut portions 38 on the rear surface 16 of the reflecting member 11, and the center of the reflecting member 11 is matched to the center of the frame member 12.

A spring 26 is placed on the beam portion 40 of the frame member 12 while substantially matching the axis of the spring 26 to the axis of the rod 25 of the adjusting member 13. Thereafter, a washer 27 is placed on the upper surface of the spring 26, and an adjusting nut 28 is screwed into the rod 25 of the adjusting member 13 until it abuts on the washer 27.

(Concave Formation in Reflecting Member)

When the adjusting nut 28 is further screwed against the spring 26 abutting on the frame member 12, the distance between the rear surface 35 of the reflecting member 11 and the adjusting nut 28 is reduced, and the center of the rear surface 35 of the reflecting member 11 is raised. Thus, the reflecting member 11 is deformed so that the mirror surface section 15 side is concave. The adjusting nut 28 is screwed and adjusted until the reflecting member 11 forms a desired paraboloidal surface. At that time, a shim 43 is inserted to a gap between the leg portion 41 at each corner and the strut portion 38 of the reflecting member 11.

According to this, the rear surface 35 of the reflecting member 11 is pulled by the adjusting member 13 attached to the frame member 12 at a position facing substantially the center of the rear surface 35 of the reflecting member 11 in a state where the periphery of the rear surface 35 of the reflecting member 11 is supported by the frame member 12, whereby the reflecting member 11 with rigidity lower at the periphery than at the center can be elastically deformed so that a paraboloidal surface is formed in the mirror surface section 15. Since a concave reflecting mirror is formed by pulling the rear surface 35 of the elastically deformable reflecting member 11 by the adjusting member 13, the concave reflecting mirror can be easily manufactured without requiring a pressing apparatus and a molding die while having a highly accurate concave surface formed therein.

[Modification Example]

As a modification example of the concave reflecting mirror 10 for heliostat of the second embodiment, the attachment frame 18 of the frame member 12 and the adjusting member 13 may be disposed similarly to Figs. 14(a) and 14(b) of the first embodiment.

According to this, the front surface of the reflecting member 11 is pressed by the adjusting member 13 attached to the frame member 12 at a position facing substantially the center of the mirror surface section 15 on the front surface of the reflecting member 11 in a state where the periphery of the rear surface 35 of the reflecting member 11 is supported by the frame member 12, whereby the reflecting member 11 with rigidity lower at the periphery than at the center can be elastically deformed so as to form a paraboloidal surface in the mirror surface section 15. Since a concave reflecting mirror is formed by pressing the front surface of the elastically deformable reflecting member 11 by the adjusting member 13, the concave reflecting mirror can be easily manufactured without requiring a pressing apparatus and a molding die while having a highly accurate concave surface formed therein.

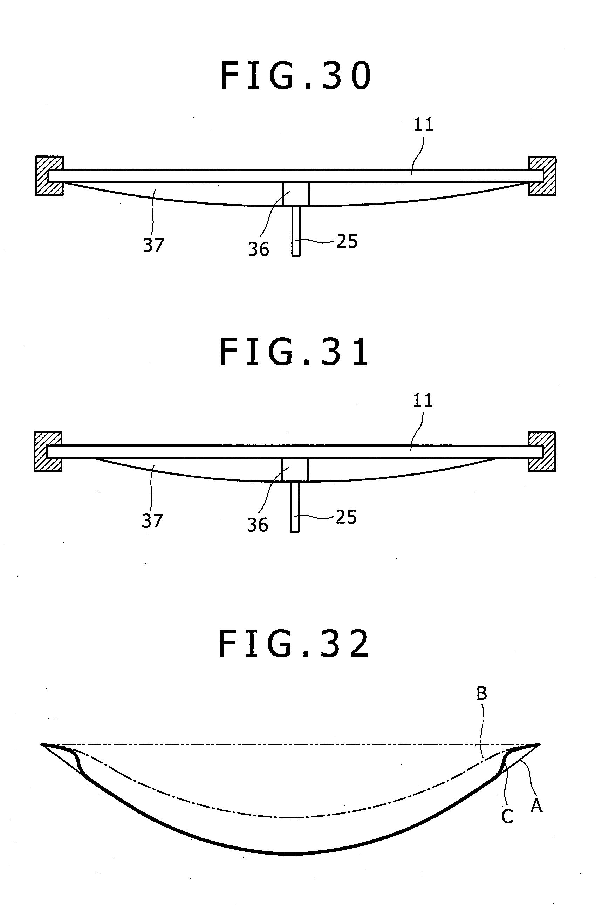

Although the leg portion 41 of the frame member 12 is simply supported by the strut portion 38 of the reflecting member 11 in this embodiment, the strut portion 38 of the reflecting member 11 and the leg portion 41 of the frame member 12 can be supported in a stationary manner by a clamp, without being limited to such a supporting method. In that case, the tip of the radial rib portion 37 is not provided up to the position of the fulcrum point as shown in Fig. 30, but provided at a position distant from the fulcrum point as shown in Fig. 31. Fig. 32 shows a comparison of deflection curves of two models which are supported in a stationary manner with a parabola. Curve A indicates the parabola. Curve B indicates a deflection curve in a case in which the tip of the radial rib portion 37 is provided up to the position of the fulcrum point and supported therein in a stationary manner. The curve B is largely diverged from the curve A. Curve C is a deflection curve in a case in which the tip of the radial rib portion 37 is provided at a position distant from the fulcrum point and supported therein in a stationary manner. The curve C is diverged in the vicinity of the fulcrum points due to the stationary support. In the range where the radial rib portion 37 is provided, an approximate parabola is formed. Deformation is never restricted between the fulcrum point and the tip of the radial rib portion 37. Therefore, the deformation can be attained in a condition where the vicinity of the fulcrum point and the approximate parabola are mutually connected. Thus, the concave surface of the reflecting member 11 can be made into a paraboloidal surface even in the case of stationary support.

3. Third Embodiment

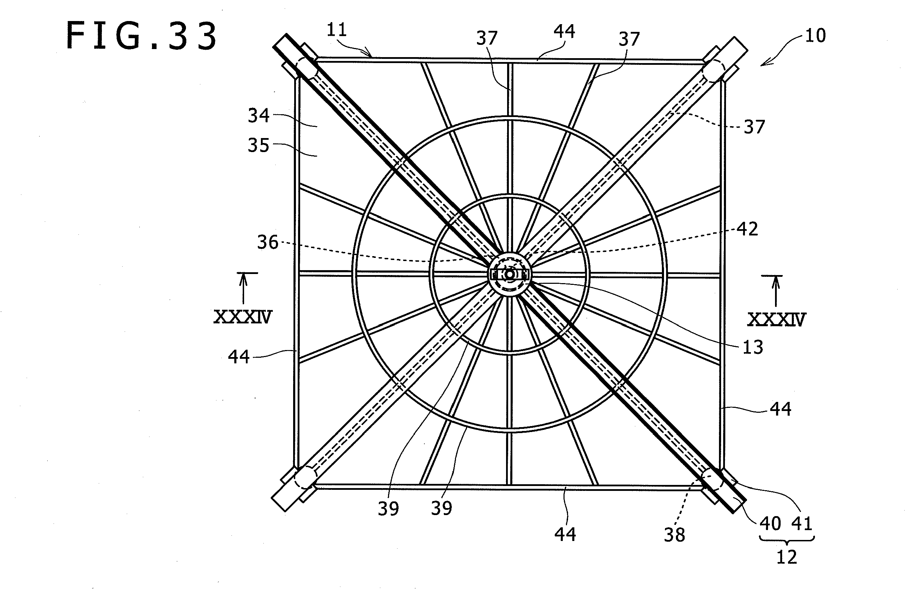

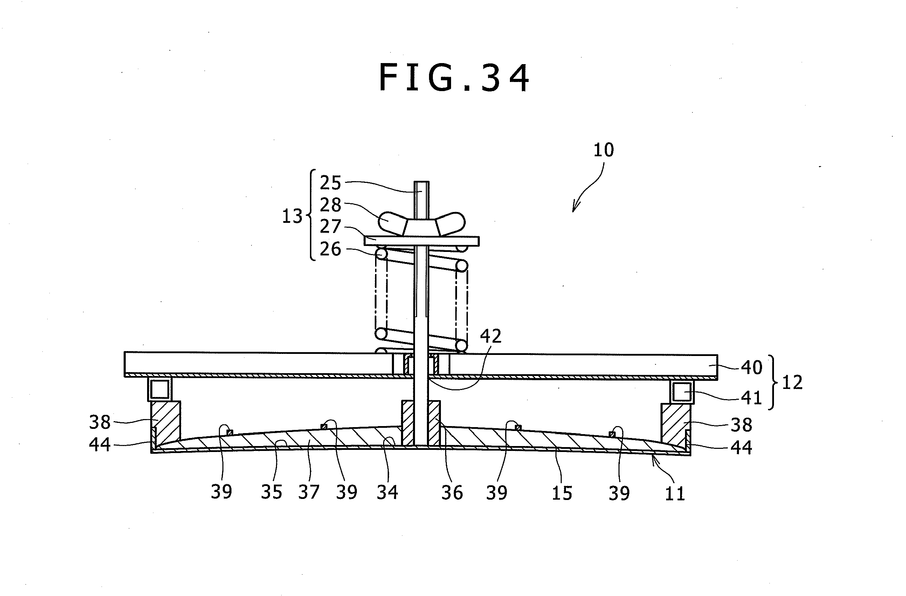

Fig. 33 and Fig. 34 show a concave reflecting mirror 10 for heliostat according to a third embodiment of the present invention. In this embodiment, the same reference numbers are assigned to the same components as in the second embodiment to omit descriptions therefor.

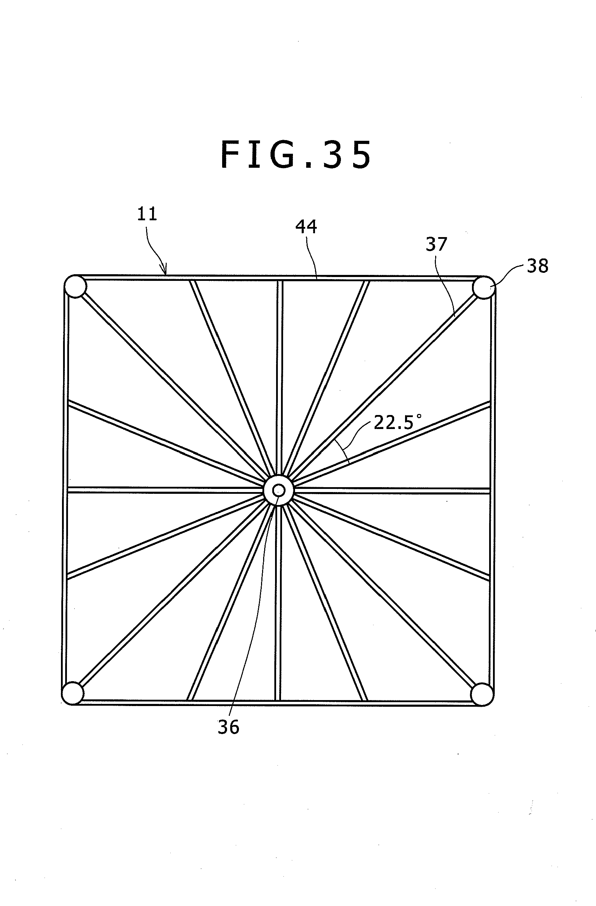

A reflecting member 11 includes radial rib portions 37 provided at intervals of 22.5° as shown in Fig. 35. Strut portions 38 are disposed only at the square corners. A peripheral rib portion 44 is provided on the outer periphery of the reflecting member 11 so as to mutually connect the strut portions 38.

A frame member 12 is the same as the frame member 12 of the second embodiment except that the beam portion 40 is provided in connection at the center so as to radially extend at intervals of 90°.

With respect to the concave design method for the mirror surface section 15 of the reflecting member 11 to form a parabola, only differences from the design method in the second embodiment will be described.

In this embodiment, deflection is caused in the vicinity of a midpoint between non-diagonal fulcrum points since the strut portion 38 is not provided on the midpoint in contrast to the reflecting member 11 of the second embodiment. Therefore, a peripheral rib portion 44 is provided as an alternate of this strut portion 38 on the midpoint so that the deflection is hardly caused.

Since the amount of deflection z of a tip portion in a radial rib is proportional to square of the rib length, a distance y from the midpoint to the strut portion 38, an angle $\theta$ formed by a line (length S) connecting the center of the reflecting member 11 to the midpoint and the radial rib portion 37, and a value $\delta$ determined from a focal distance can be calculated as follows.
**[Mathematical Formula 28]**

$$y = S \tan \theta$$

$$z = \delta / \cos^2 \theta$$

$$y^2 = S^2 \frac{1 - \cos^2 \theta}{\cos^2 \theta}$$

$$\delta y^2 = S^2 (z - \delta)$$

$$z = \delta \frac{y^2}{S^2} + \delta$$

The thus-calculated z indicates a parabola related to y. Therefore, the tips of the radial rib portions 37 connected by the peripheral rib portion 44 are located on the parabola.

Since the radial rib portion 37 has elasticity, the tip thereof can be considered to behave as if a spring is connected thereto. The spring constant is varied depending on the length of the radial rib portion 37.

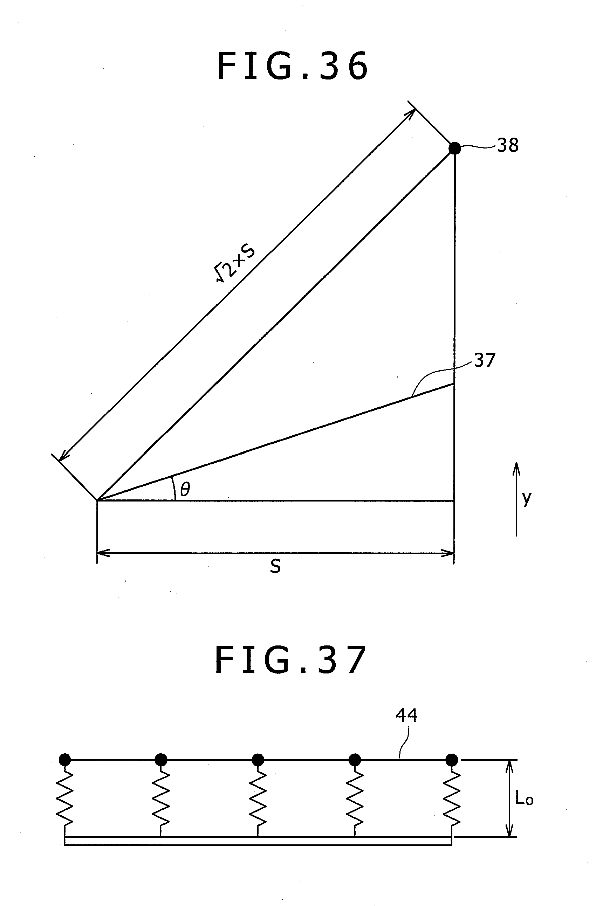

Fig. 37 shows one side of the outer circumference of the reflecting member 11. ● indicates a tip portion of the radial rib portion 37 to which a spring having a length of Lo is connected. The line connecting the points ● corresponds to the peripheral rib portion 44. The tip portions shown at both the ends are diagonal ones of the radial rib portions 37, and matched to the strut portions 38. To pull the center of a plate with diagonal tips thereof as fulcrum points is equal to pull up the tip portions shown at both the ends. At that time, the rigidity is set so that the peripheral rib portion 44 is deflected in a parabolic shape.

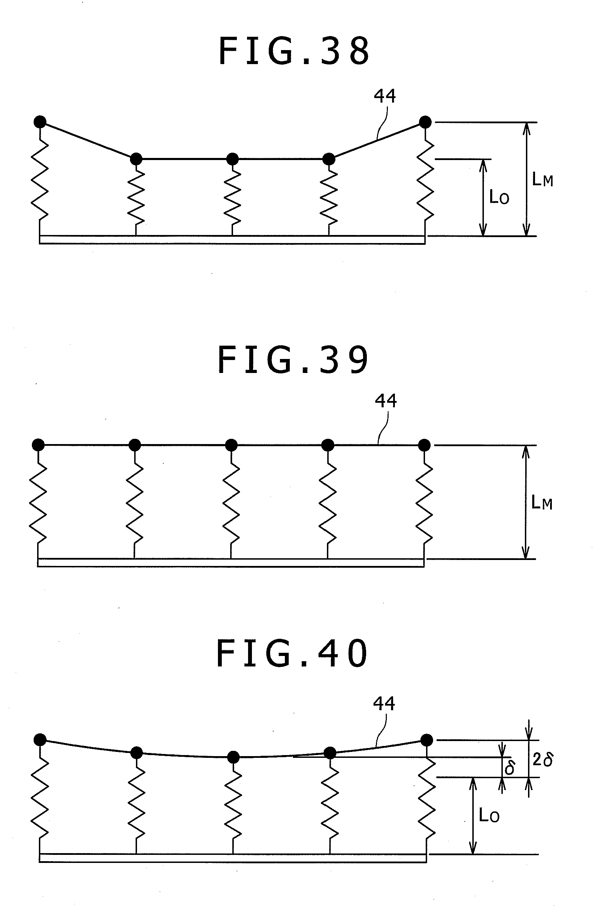

Fig. 38 shows one side of the outer circumference of the reflecting member 11 when the rigidity of the peripheral rib portion 44 is extremely low. When the tip portions shown at both the ends are pulled up, only the tip portions shown at both the ends are deformed, and the length of the spring is changed from Lo to $L_M$.

Fig. 39 shows one side of the outer circumference of the reflecting member 11 when the rigidity of the peripheral rib portion 44 is extremely high. When the tip portions shown at both the ends are pulled upward, not only the tip portions shown at both the ends but also all the tip portions are lifted up together. The lengths of all the springs are $L_M$.

Fig. 40 shows one side of the outer circumference of the reflecting member 11 when the rigidity of the peripheral rib portion 44 is adjusted. Since the deflection is doubled in the corner at a distance √2 times the length from the center to the midpoint, the adjustment is performed so that the length of the spring at the midpoint is elongated by δ, and the length of the springs of the tip portions shown at both ends are elongated by 2δ when the tip portions shown at both the ends are pulled upward. By providing the peripheral rib portion 44 adjusted in rigidity in this way, a parabola can be formed even in a case where no support portion at the midpoint is provided.

As a modification example of the concave reflecting mirror 10 for heliostat of the third embodiment, the attachment frame 18 of the frame member 12 and the adjusting member 13 may be disposed similarly to Figs. 14(a) and 14 (b) of the first embodiment.

Accordingly, the front surface of the reflecting member 11 is pressed by the adjusting member 13 attached to the frame member 12 at a position facing substantially the center of the mirror surface section 15 on the front surface of the reflecting member 11 in a state where the periphery of the rear surface 35 of the reflecting member 11 is supported by the frame member 12, whereby the reflecting member 11 with rigidity lower at the periphery than at the center can be elastically deformed to form a paraboloidal surface in the mirror surface section 15. Since a concave reflecting mirror is formed by pressing the front surface of the elastically deformable reflecting member 11 by the adjusting member 13, the concave reflecting mirror can be easily manufactured without requiring a pressing apparatus and a molding die while having a highly accurate concave surface formed therein.

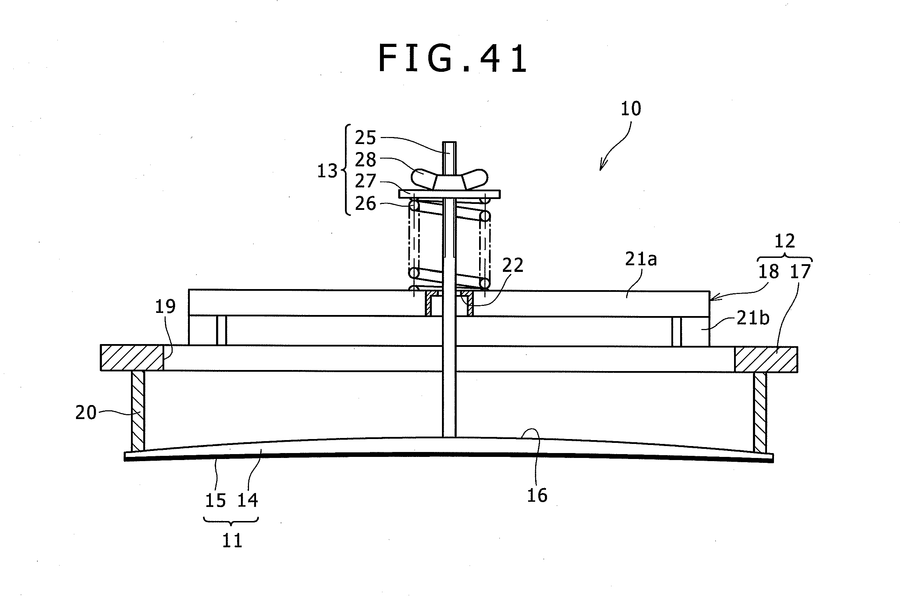

Embodiments of the present invention are never limited to the above. For example, in the embodiment of the present invention shown in Figs. 1 and 2, the rear surface 16 of the base material 14 is formed so that the thickness is reduced stepwise from the center to the periphery. It is sufficient for the rear surface 16 of the base material 14 to be formed so that the thickness is reduced from the center to the periphery, and it is not an indispensable factor to form the rear surface in a stair-like shape. For example, the rear surface 16 of the base material 14 may be formed, as shown in Fig. 41, so that the thickness is continuously reduced from the center to the periphery. In this case, the rear surface 16 of the base material 14 is preferably molded by casting or the like.

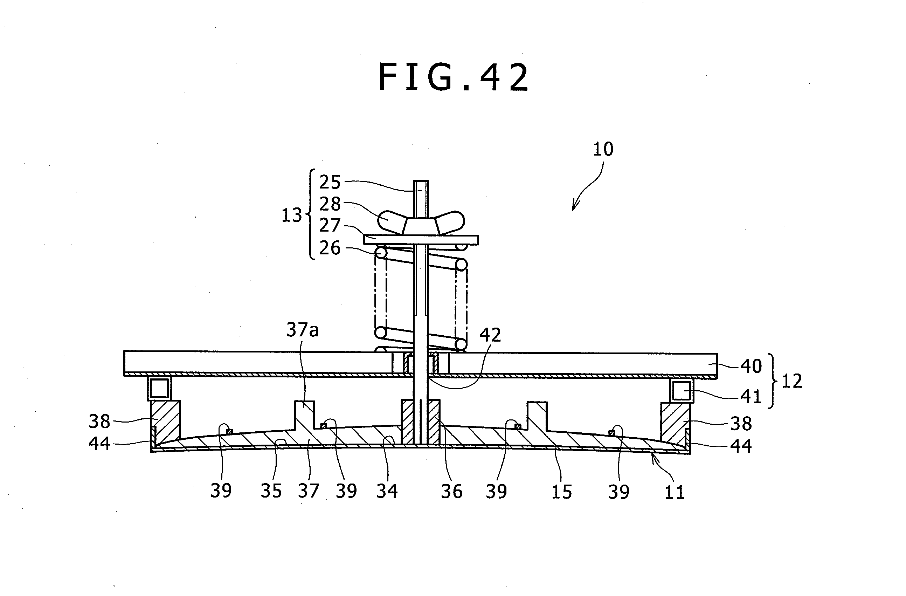

The reflecting member of the present invention is required to be reduced in rigidity from the center to the periphery. However, it is not required that the rigidity is reduced in the overall area from the center to the periphery, and it is permitted that the rigidity is constant or reversely increased in a partial area from the center to the periphery. For example, an embodiment shown in Fig. 42 has substantially the same configuration as the one shown in Fig. 34, but is differed from the one shown in Fig. 34 in that the radial rib portion 37 partially includes a projection 37a. Namely, although the rigidity of the reflecting member is not reduced from the center to the periphery in a small area where the projection 37 exists, such a configuration is also included in the present invention.

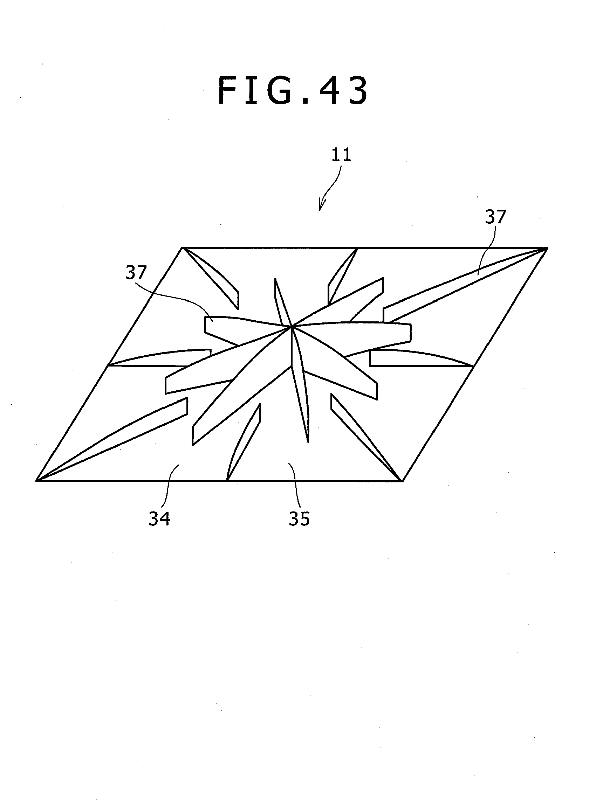

The radial ribs existing along the diagonals may be partially disconnected although they are preferably formed uniformly over the diagonals. For example, the radial rib portions 37 may be formed as shown in Fig. 43.

**REFERENCE SIGNS LIST**

10. Concave reflecting mirror for heliostat
11. Reflecting member
12. Frame member
13. Adjusting member
14. Base material
15. Mirror surface section
16. Rear surface
17. Support frame section
18. Attachment frame section
19. Through-hole
20. Annular rib
21a. Beam portion
21b. Leg portion
22. Insert hole
25. Rod
26. Spring
27. Washer
28. Adjusting nut
31. Mirror
32. Heated portion
33. Disk
34. Flat plate section
35. Rear surface
36. Boss portion
37. Radial rib portion
38. Strut portion
39. Auxiliary rib portion
40. Beam portion
41. Leg portion 42. Through-hole
Tc. Central thickness
To. Peripheral thickness

**Claims**

1. A concave reflecting mirror for heliostat, comprising:

a reflecting member which includes a mirror surface section provided on the front surface of a base material and which is elastically deformable with rigidity differed by location from the center to the periphery so that the mirror surface section forms a concave paraboloidal surface;
a frame member which supports the periphery of the rear surface of the reflecting member; and
an adjusting member which is attached to the frame member at a position facing substantially the center of the rear surface or front surface of the reflecting member, and which elastically deforms the reflecting member by pulling the rear surface of the reflecting member or pressing the front surface of the reflecting member.

2.  A concave reflecting mirror for heliostat, comprising:

a reflecting member which includes a mirror surface section provided on the front surface of a base material and which has rigidity lower at the periphery than at the center and is elastically deformable;
a frame member which supports the periphery of the rear surface of the reflecting member; and
an adjusting member which is attached to the frame member at a position facing substantially the center of the rear surface or front surface of the reflecting member and which elastically deforms the reflecting member by pulling the rear surface of the reflecting member or pressing the front surface of the reflecting member.

3.  The concave reflecting mirror for heliostat according to claim 2, wherein the reflecting member has a circular outer shape, and the rear surface thereof is formed so that the thickness is reduced from the center to the periphery.

4.  The concave reflecting mirror for heliostat according to claim 2, wherein the reflecting member includes:

a flat plate section which has a square outer shape and a uniform thickness; and
a plurality of radial rib portions which are provided in a protruding condition respectively along diagonals on the rear surface of the flat plate section and each between the diagonals and which have rigidity reduced from the center to the periphery, and
the reflecting member is supported at four or more fulcrum points including, among the plurality of radial rib portions, at least four fulcrum points provided at the square corner-side tips of the radial rib portions disposed along the diagonals.

5.  The concave reflecting mirror for heliostat according to claim 2, wherein the reflecting member includes:

a flat plate section having a square outer shape and a uniform thickness; and
a plurality of radial rib portions which are provided in a protruding condition along diagonals on the rear surface of the flat plate section and each between the diagonals and which have rigidity reduced from the center to the periphery,
four fulcrum points to be supported by the frame member are provided at the square corner-side tips of the radial rib portions disposed along the diagonals among the plurality of radial rib portions, and a peripheral rib portion is provided so as to mutually connect the fulcrum points.

6.  The concave reflecting mirror for heliostat according to claim 4 or claim 5, wherein each of the radial rib portions is formed so that the value of $bh^3$ is substantially proportional to the distance from the fulcrum point, wherein h is the protruding height from the rear surface of the flat plate section of the radial rib portion, and b is the width thereof.

7.  The concave reflecting mirror for heliostat according to any one of claim 4 and claim 5, wherein the plurality of adjacent radial rib portions are mutually connected by an auxiliary rib portion.

8.  A method for manufacturing a concave reflecting mirror for heliostat, comprising:

forming a reflecting member which includes a mirror surface section provided on the front surface of a base material and which is elastically deformable with rigidity differed by location from the center to the periphery so that the mirror surface section forms a concave paraboloidal surface;
supporting the periphery of the rear surface of the base material of the reflecting member by a frame member; and
elastically deforming the reflecting member by pulling substantially the center of the base material on the rear surface of the reflecting member or pressing substantially the center of the mirror surface section on the front surface of the reflecting member by an adjusting member provided on the frame member.

9.  A method for manufacturing a concave reflecting mirror for heliostat, comprising:

forming a reflecting member which includes a mirror surface section provided on the front surface of a base material and which has rigidity lower at the periphery than at the center and is elastically deformable;
supporting the periphery of the rear surface of the base material of the reflecting member by a frame member; and
elastically deforming the reflecting member by pulling substantially the center of the base material on the rear surface of the reflecting member or pressing substantially the center of the mirror surface section on the front surface of the reflecting member by an adjusting member provided on the frame member.

10. A method for manufacturing a concave reflecting mirror for heliostat, comprising:

forming a reflecting member which is elastically deformable so that a mirror surface section forms a concave paraboloidal surface, the mirror surface section being formed on the front surface of a base material which has a circular outer shape and is formed so that the thickness of the rear surface is reduced from the center to the periphery;

supporting the periphery of the rear surface of the base material of the reflecting member by a frame member with an adjusting member being attached thereto; and

elastically deforming the reflecting member by pulling substantially the center of the base material on the rear surface of the reflecting member or pressing substantially the center of the mirror surface section on the front surface of the reflecting member by the adjusting member provided on the frame member.

11. A method for manufacturing a concave reflecting mirror for heliostat, comprising:

forming a reflecting member which is elastically deformable so that a mirror surface section forms a concave paraboloidal surface, the mirror surface section being formed on the front surface of a flat plate section with a uniform thickness which has a square outer shape and includes a plurality of radial rib portions provided in a protruding condition respectively along diagonals on the rear surface thereof and each between the diagonals, the radial rib portions being reduced in rigidity from the center to the periphery and having four or more fulcrum points including at least four fulcrum points provided at the tips on the square corner side;

supporting the periphery of the rear surface of the base material of the reflecting member at the fulcrum points by a frame member with an adjusting member being attached thereto; and

elastically deforming the reflecting member by pulling substantially the center of the base material on the rear surface of the reflecting member or pressing substantially the center of the mirror surface section on the front surface of the reflecting member by the adjusting member provided on the frame member.

12. A method for manufacturing a concave reflecting mirror for heliostat, comprising:

forming a reflecting member which is elastically deformable so that a mirror surface section forms a concave paraboloidal surface, the mirror surface section being formed on the front surface of a flat plate section with a constant thickness which has a square outer shape and includes a plurality of radial rib portions provided on the rear surface thereof in a projecting condition along diagonals of the square and each between the diagonals, the radial rib portions being reduced in rigidity from the center toward the periphery and having four fulcrum points at the tips on the square corner side; and a peripheral rib portion provided to mutually connect the fulcrum points;

supporting the periphery of the rear surface of the base material of the reflecting member at the fulcrum points by a frame member with an adjusting member being attached thereto; and

elastically deforming the reflecting member by pulling substantially the center of the base material on the rear surface of the reflecting member or pressing substantially the center of the mirror surface section on the front surface of the reflecting member by the adjusting member provided on the frame member.

# FIG.1

# F I G . 2

EP 2 538 152 A1

# FIG.3

# F I G . 4

# F I G . 5

# FIG.6

# FIG.7

# F I G . 8

# F I G . 9

# FIG.10

# FIG.11

# FIG.12

FIG.13

# FIG.14A

# FIG.14B

# FIG.15

EP 2 538 152 A1

FIG.16

EP 2 538 152 A1

# FIG.17

# FIG.18

# FIG.19A

FRAME SURFACE

CENTER

2S (TWICE THE DISTANCE S FROM
CENTER TO MIDPOINT)

# FIG.19B

FRAME SURFACE

CENTER

2S (TWICE THE DISTANCE S FROM
CENTER TO MIDPOINT)

$2 \times \sqrt{2} \times S$ (TWICE THE DISTANCE ($\sqrt{2} \times S$)FROM
CENTER TO CORNER)

# FIG.20

# FIG.21

11

# FIG.22

# FIG.23

INCLINATION

Y

# FIG.24

# FIG.25

INCLINATION

Y

# FIG.26

# FIG.27

INCLINATION

Y

# FIG.28

11

FIG.29

# FIG.30

11

37  36  25

# FIG.31

11

37  36  25

# FIG.32

B

C  A

FIG.33

EP 2 538 152 A1

# FIG.34

EP 2 538 152 A1

# FIG.35

# FIG.36

# FIG.37

# FIG.38

# FIG.39

# FIG.40

# FIG.41

# FIG.42

EP 2 538 152 A1

# FIG.43

## INTERNATIONAL SEARCH REPORT

| | International application No. |
|---|---|
| | PCT/JP2011/053505 |

A. CLASSIFICATION OF SUBJECT MATTER
*F24J2/10*(2006.01)i, *G02B5/10*(2006.01)i, *G02B7/182*(2006.01)i

According to International Patent Classification (IPC) or to both national classification and IPC

B. FIELDS SEARCHED

Minimum documentation searched (classification system followed by classification symbols)
F24J2/10-2/14, 2/07, 2/38, G02B5/10, G02B7/182

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | DE 3641944 A1   (SCHOENHERR, MICHAEL, PROF. | 1-3,8-10 |
| Y | DIPL.-ING.), | 1-3,8-10 |
| A | 07 July 1988 (07.07.1988), | 4-7,11-12 |
| | column 2, line 52 to column 3, line 65; | |
| | fig. 1 to 2 | |
| | (Family: none) | |
| | | |
| Y | Microfilm of the specification and drawings | 1-3,8-10 |
| | annexed to the request of Japanese Utility | |
| | Model Application No. 58595/1990(Laid-open | |
| | No. 16960/1992) | |
| | (Yugen Kaisha Ibe Kagamiten), | |
| | 12 February 1992 (12.02.1992), | |
| | specification, page 10, line 16 to page 11, | |
| | line 2; fig. 11 | |
| | (Family: none) | |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 April, 2011 (04.04.11) | 19 April, 2011 (19.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/053505 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2002-154179 A  (Kobe Steel, Ltd.), 28 May 2002 (28.05.2002), fig. 3 (Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002154179 A